(19) Europäisches Patentamt
European Patent Office
Office européen des brevets

(11) **EP 4 071 417 B1**

(12) **EUROPEAN PATENT SPECIFICATION**

(45) Date of publication and mention of the grant of the patent:
**12.07.2023 Bulletin 2023/28**

(21) Application number: **21761962.6**

(22) Date of filing: **18.01.2021**

(51) International Patent Classification (IPC):
**F24F 11/84** (2018.01)      **F24F 11/86** (2018.01)
**F24F 11/871** (2018.01)      **F25B 30/02** (2006.01)
**F25B 47/02** (2006.01)

(52) Cooperative Patent Classification (CPC):
**F25B 30/02; F24F 11/84; F24F 11/86;**
**F24F 11/871; F25B 47/02; F25B 47/022;**
**F25B 47/025;** F25B 2347/02; F25B 2600/027;
F25B 2700/11; F25B 2700/1931; F25B 2700/1933;
F25D 21/006

(86) International application number:
**PCT/CN2021/072451**

(87) International publication number:
**WO 2022/151470 (21.07.2022 Gazette 2022/29)**

(54) **HEAT PUMP DEFROSTING CONTROL METHOD AND HEAT PUMP DEFROSTING CONTROL APPARATUS**

WÄRMEPUMPEN-ABTAUUNGSSTEUERUNGSVERFAHREN UND WÄRMEPUMPEN-ABTAUUNGSSTEUERUNGSGERÄT

PROCÉDÉ DE COMMANDE DE DÉGIVRAGE DE POMPE À CHALEUR ET APPAREIL DE COMMANDE DE DÉGIVRAGE DE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2022 Bulletin 2022/41**

(73) Proprietor: **GUANGDONG PHNIX ECO-ENERGY SOLUTION LTD.**
**Guangzhou, Guangdong 511470 (CN)**

(72) Inventors:
• **LIU, Zhili**
**Guangzhou, Guangdong 511470 (CN)**
• **LEI, Pengfei**
**Guangzhou, Guangdong 511470 (CN)**
• **ZHANG, Li**
**Guangzhou, Guangdong 511470 (CN)**
• **YE, Jingfa**
**Guangzhou, Guangdong 511470 (CN)**

• **LI, Caoxuan**
**Guangzhou, Guangdong 511470 (CN)**
• **CAI, Pengcheng**
**Guangzhou, Guangdong 511470 (CN)**
• **LUO, Sen**
**Guangzhou, Guangdong 511470 (CN)**

(74) Representative: **Petculescu, Ana-Maria**
**Bayramoglu Law Offices LLC Türkiye Irtibat Ofisi, Mira Office, Kanuni Sultan Süleyman Boulevard, 5387. street Beytepe, floor 12, no:50 06800 Cankaya, Ankara (TR)**

(56) References cited:
WO-A1-2017/216861    WO-A1-2020/056956
CN-A- 110 173 820    CN-A- 110 173 820
CN-A- 110 595 122    CN-A- 111 412 700
CN-A- 111 412 700    JP-A- H10 253 205
JP-A- 2011 252 639    JP-A- 2011 257 108
US-B1- 9 410 727

**Description**

The present invention relates to the field of heat pump technologies, and in particular, to a heat pump defrosting control method, apparatus, and device, and a storage medium.

BACKGROUND

A low-temperature heat pump is usually installed in an outdoor environment. During operation, an evaporator draws a large amount of heat from the air, which causes the air temperature to fall. When the air temperature drops to a certain temperature, the moisture in the air passes through the evaporator, and then starts to frost up and attach to the surface of the evaporator. When a frost layer is attached to the evaporator, heat exchange efficiency of the evaporator decreases, a unit heat production amount decreases, and unit energy efficiency decreases. In addition, evaporation of a refrigerant is insufficient, which causes the temperature of the evaporator to decrease and aggravate frosting, resulting in a vicious circle. Therefore, the heat pump must be defrosted when operating at a low temperature to ensure continuous operation.

At present, heat pump defrosting mainly adopts a direction switching defrosting mode of a four-way valve. The existing direction switching defrosting mode of the four-way valve usually causes relatively large noise. The main reasons are as follows: First, a defrosting entry opportunity is improper. An improper entry opportunity not only affects the defrosting effect, but also affects the noise in the direction switching process of the four-way valve. Currently, the setting of a heat pump defrosting entry condition does not consider the noise in the direction switching process of the four-way valve. Second, pressure of a compressor is not controlled properly. Affected by internal and external factors of a heat pump system, during the direction switching process of the four-way valve, suction pressure and discharge pressure of the compressor change, resulting in large noise. CN110595122A discloses a defrosting control method, device and system of a heat pump. WO2020/056956A1 discloses a defrosting control method and device for a heat pump unit, a storage medium, and a heat pump

Documents CN111412700A and CN110173820A also disclose relevant heat pump defrosting control methods.

SUMMARY

The present application is disclosed in the independent claims 1, 5 and 7. Further embodiments are disclosed in the dependent claims.

A first aspect of the present invention according to claim 1 provides a heat pump defrosting control method, where the heat pump defrosting control method includes:

reading in real time flag bit values respectively corresponding to multiple defrosting determining parameters;
determining, according to each read flag bit value, whether a current heat pump meets a defrosting entry condition;
if the current heat pump meets the defrosting entry condition, entering a heat pump defrosting time sequence;
after the heat pump defrosting time sequence is entered, detecting compressor discharge pressure and compressor suction pressure at preset interval duration, and calculating a pressure difference between the compressor discharge pressure and the compressor suction pressure; and
dynamically adjusting operation manners of a compressor, a fan, and an electronic expansion valve according to the pressure difference in the heat pump defrosting time sequence.

Before the reading in real time flag bit values respectively corresponding to multiple defrosting determining parameters, the method further includes:

collecting parameter values of the multiple defrosting determining parameters in real time;
separately determining whether each parameter value meets a defrosting determining condition corresponding to the parameter value; and
if each parameter value meets the defrosting determining condition corresponding to the parameter value, separately resetting a flag bit value corresponding to each defrosting determining parameter.

The defrosting determining parameters include: fan input power, a compressor suction temperature, compressor suction pressure, unit heat production power, and unit cumulative operation duration after a defrosting period starts or ends.

The collecting parameter values of the multiple defrosting determining parameters in real time includes:
collecting in real time the fan input power, the compressor suction temperature, the compressor suction pressure, the unit heat production power, when each defrosting period starts or ends, collecting statistics on unit cumulative operation duration in real time, recording unit heat production power after a unit stably operates for preset duration after each defrosting period ends, and using the recorded unit heat production power as a preset value of unit heat production power corresponding to a next defrosting period.

The separately determining whether each parameter value meets a defrosting determining condition corresponding to the parameter value includes:

determining, according to a first preset mapping relationship between an ambient temperature and fan input power, whether current fan input power is greater than a first preset percentage of a preset value of fan input power corresponding to a current ambient temperature;

determining, according to a second preset mapping relationship between an ambient temperature and a compressor suction temperature, whether a current compressor suction temperature is less than a preset value of a compressor suction temperature corresponding to the current ambient temperature;

determining, according to a third preset mapping relationship between an ambient temperature and compressor suction pressure, whether current compressor suction pressure is less than a preset value of compressor suction pressure corresponding to the current ambient temperature;

determining, according to a preset value of unit heat production power corresponding to a previous defrosting period, whether current unit heat production power is less than a second preset percentage of the preset value of the unit heat production power corresponding to the previous defrosting period; and

determining, according to a preset value of interval duration of adjacent defrosting periods, whether unit cumulative operation duration after a defrosting period starts or ends reaches the preset value of the interval duration.

The first preset mapping relationship is obtained in the following measurement manner:
during measurement, keeping the fan operating at the same rotation speed and turning off the compressor; adjusting the ambient temperature from -40°C-53°C and recording the current ambient temperature and the fan input power corresponding to the current ambient temperature at a preset temperature interval; and generating the first preset mapping relationship according to the recorded ambient temperature and fan input power, wherein the fan input power is measured once at an interval of 1°C of the ambient temperature from -40°C-53°C to obtain an impact curve of the ambient temperature on the fan input power when the fan is not frosted up, that is, the first preset mapping relationship; the impact curve is preset in a main control program of the heat pump and is used as a start reference determining value of the unit using the fan input power for defrosting at different ambient temperatures.

Optionally, in a preferred implementation of the first aspect of the present invention, the dynamically adjusting operation manners of a compressor, a fan, and an electronic expansion valve according to the pressure difference in the heat pump defrosting time sequence includes:

in the heat pump defrosting time sequence, when $\Delta P$ is greater than $P_1$, controlling the compressor to decrease at a uniform speed to the minimum frequency and the fan to increase at a uniform speed to the maximum rotation speed, and controlling the electronic expansion valve to exit heat adjustment and increase by a first preset opening degree;

when $\Delta P$ is less than or equal to $P_1$ and is greater than or equal to $P_2$, controlling the compressor to decrease at a uniform speed to the minimum frequency and the fan to increase at a uniform speed to the maximum rotation speed, and controlling the electronic expansion valve to maintain a current opening degree; and

when $\Delta P$ is less than $P_2$, turning off the fan, controlling a four-way valve to switch a direction toward a defrosting entry mode through speed adjustment in cooperation with an inverter compressor, adjusting the electronic expansion valve to a defrosting opening degree, and keeping the compressor operating at the minimum frequency, where

$\Delta P$ is the pressure difference between the compressor discharge pressure and the compressor suction pressure, $P_1$, $P_2$, and $P_3$ are preset pressure thresholds, and $P_3 < P_2 < P_1$; in a frequency increasing process of the compressor, if the compressor suction pressure is less than $P_3$, frequency increasing is stopped, and when the compressor suction pressure is greater than or equal to $P_3$, the compressor is continuously controlled to perform frequency increasing at a uniform speed.

Optionally, in a preferred implementation of the first aspect of the present invention, the heat pump defrosting control method further includes:

after the heat pump defrosting time sequence is entered, detecting a fin coil temperature of an evaporator in real time, and determining whether the fin coil temperature is greater than a preset temperature threshold;

if the fin coil temperature is greater than the preset temperature threshold, entering a defrosting exit time sequence; and

dynamically adjusting the operation manners of the compressor, the fan, and the electronic expansion valve according to the pressure difference in the defrosting exit time sequence.

Optionally, in a preferred implementation of the first aspect of the present invention, the dynamically adjusting the operation manners of the compressor, the fan, and the electronic expansion valve according to the pressure difference in the defrosting exit time sequence includes:

in the defrosting exit time sequence, when $\Delta P$ is greater than $P_1$, controlling the compressor to decrease at a uniform speed to the minimum frequency, and the electronic expansion valve to decrease by a second preset opening degree, where the first preset opening degree is less than the second preset opening degree;

when $\Delta P$ is less than or equal to $P_1$ and is greater than or equal to $P_2$, controlling the compressor to decrease at a uniform speed to the minimum frequency, and the electronic expansion valve to decrease by the first preset opening degree; and

when $\Delta P$ is less than $P_2$, controlling the four-way valve to switch a direction toward a defrosting exit mode through speed adjustment in cooperation with the inverter compressor, turning on the fan, controlling the fan to increase at a uniform speed to the maximum rotation speed, adjusting the electronic expansion valve to an initial opening degree, and controlling the compressor to increase at a uniform speed to a preset target frequency from the minimum frequency.

A second aspect of the present invention according to claim 5 provides a heat pump defrosting control apparatus, using the heat pump defrosting control method in accordance with any one of claims 1-4, where the heat pump defrosting control apparatus includes

a memory, configured to store instructions;

a reading module, configured to read in real time flag bit values respectively corresponding to multiple defrosting determining parameters;

a determining module, configured to determine, according to each read flag bit value, whether a current heat pump meets a defrosting entry condition;

an automated module, configured to: if the current heat pump meets the defrosting entry condition, enter a heat pump defrosting time sequence;

a detection module, configured to: after the heat pump defrosting time sequence is entered, detect compressor discharge pressure and compressor suction pressure at preset interval duration, and calculate a pressure difference between the compressor discharge pressure and the compressor suction pressure; and

an adjustment module, configured to dynamically adjust operation manners of a compressor, a fan, and an electronic expansion valve according to the pressure difference in the heat pump defrosting time sequence

and at least one processor, configured to invoke the instructions in the memory, so that the heat pump defrosting control apparatus performs the heat pump defrosting control method.

Optionally, in a preferred implementation of the second aspect of the present invention, the heat pump defrosting control apparatus further includes:

a collection module, configured to collect parameter values of the multiple defrosting determining parameters in real time;

the determining module is further configured to separately determine whether each parameter value meets a defrosting determining condition corresponding to the parameter value; and

a reset module, configured to: if each parameter value meets the defrosting determining condition corresponding to the parameter value, separately reset a flag bit value corresponding to each defrosting determining parameter.

A third aspect of the present invention according to claim 7 provides a computer readable storage medium, wherein the computer readable storage medium stores instructions, and the instructions are to be executed via a processor by the heat pump defrosting control apparatus in accordance with claim 5, which is configured to implement the foregoing heat pump defrosting control method according to any one of claims 1-4, wherein the processor is configured to comprise:

a reading module, configured to read in real time flag bit values respectively corresponding to multiple defrosting determining parameters;

a determining module, configured to determine, according to each read flag bit value, whether a current heat pump meets the defrosting entry condition;

an automated module, configured to: if the current heat pump meets the defrosting entry condition, enter the heat pump defrosting time sequence;

a detection module, configured to: after the heat pump defrosting time sequence is entered, detect compressor discharge pressure and compressor suction pressure at preset interval duration, and calculate a pressure difference between the compressor discharge pressure and the compressor suction pressure; and

an adjustment module, configured to dynamically adjust operation manners of a compressor, a fan, and an electronic expansion valve according to the pressure difference in the heat pump defrosting time sequence.

In the technical solutions provided in the present invention, multiple defrosting determining parameters are specified in advance, and a defrosting determining condition and a flag bit corresponding to each defrosting determining parameter are set. A flag bit value corresponding to each defrosting determining parameter is collected in real time to determine whether a current heat pump meets a defrosting entry condition, and if the current heat pump meets the defrosting entry condition, a heat pump defrosting time sequence is directly entered. The defrosting entry condition specified in the present invention meets multiple working conditions of heat pump defrosting, thereby improving precision of defrosting detection, and controlling an entry opportunity of heat pump defrosting reduces noise generated in a heat pump defrosting process. In addition, in the present invention, operation manners of a compressor, a fan, and an electronic expansion valve are dynamically adjusted in the heat pump defrosting process by detecting system pressure in real time, thereby effectively reducing the noise generated in the heat pump defrosting process, and improving safety of direction switching of a four-way valve and operation reliability of the compressor.

BRIEF DESCRIPTION OF DRAWINGS

FIG. 1 is a schematic diagram of a heat pump defrosting control method according to an example not being part of the present invention;

FIG. 2 is a schematic diagram of another heat pump defrosting control method according to an example not being part of the present invention;

FIG. 3 is a schematic diagram of a change trend of fan input power and a fin frosting degree according to an example not being part of the present invention;

FIG. 4 is a schematic diagram of a change trend of fan input power and an ambient temperature according to an example not being part of the present invention;

FIG. 5 is a schematic diagram of a change trend of a compressor suction temperature and an ambient temperature according to an example not being part of the present invention;

FIG. 6 is a schematic diagram of a change trend of compressor suction pressure and an ambient temperature according to an example not being part of the present invention;

FIG. 7 is a schematic diagram of a change trend of unit heat production power and a fin frosting degree according to an example not being part of the present invention;

FIG. 8 is a schematic diagram of a heat pump defrosting control apparatus according to an example not being part of the present invention; and

FIG. 9 is a schematic diagram of a heat pump defrosting control device according to an example not being part of the present invention.

DESCRIPTION OF examples not being part of the present invention

Examples not being part of the present invention provide a heat pump defrosting control method, apparatus, and device, and a storage medium, which are applied to a heat pump system based on direction switching defrosting of a four-way valve. In the specification, claims, and accompanying drawings, the terms "first", "second", "third", "fourth", and so on (if any) are intended to distinguish between similar objects but do not necessarily indicate a specific order or sequence. It should be understood that the terms used in such a way are interchangeable in proper circumstances, so that the examples described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

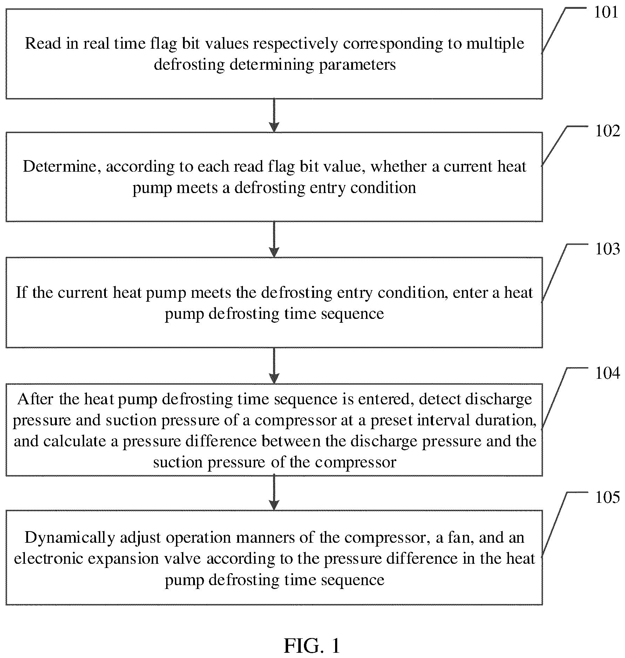

For ease of understanding, the following describes a specific procedure of an example not being part of the present invention. Referring to FIG. 1, a heat pump defrosting control method in an example not being part of the present invention includes the following steps.

101. Read in real time flag bit values respectively corresponding to multiple defrosting determining parameters.

In this example, to accurately determine a working condition about whether a heat pump needs to be defrosted, multiple defrosting determining parameters are used to perform comprehensive determining, each defrosting determining parameter is corresponding to one flag bit, a flag bit value is preferably 0 or 1, and the flag bit value is specifically determined according to a defrosting determining condition corresponding to each defrosting determining parameter.

Optionally, in an example, the defrosting determining parameters preferably include: fan input power, a compressor suction temperature, compressor suction pressure, unit heat production power, and unit cumulative operation duration after a defrosting period starts or ends.

102. Determine, according to each read flag bit value, whether a current heat pump meets a defrosting entry condition.

In this example, it is specifically determined, according to each flag bit value, whether the current heat pump meets the defrosting entry condition, and the multiple flag bit values are used to jointly determine whether to enter defrosting.

If a defrosting entry opportunity is improper, not only a defrosting effect is affected, but also noise in a direction switching process of a four-way valve is affected. Therefore, multiple defrosting entry conditions are specified based on the foregoing consideration and a combination of different heat pump working conditions, so as to ensure the defrosting effect and defrosting noise reduction.

In this example, the defrosting entry condition specifically includes a combination of multiple defrosting determining conditions, and the defrosting determining condition is specifically specified based on the defrosting determining parameter.

In an example, step 102 specifically includes:

separately determining whether each read flag bit value is correspondingly the same as a flag bit value of any combination in a preset defrosting determining condition combination set; and if each flag bit value is correspondingly the same as a flag bit value of any combination, determining that the current heat pump meets the defrosting entry condition.

In this example, a defrosting determining condition combination for entering defrosting is preset. When each flag bit value is correspondingly the same as a flag bit value of any combination, it is determined that the current heat pump meets the defrosting entry condition.

Optionally, the defrosting determining condition combination set includes at least:

(1) A first defrosting determining condition combination: the unit meets all defrosting determining conditions corresponding to the compressor suction pressure, the compressor suction temperature, the unit heat production power, and interval duration of adjacent defrosting periods, and the unit does not meet a defrosting determining condition corresponding to the fan input power.

In this condition combination, the unit needs to meet all the conditions of the compressor suction pressure, the compressor suction temperature, the unit heat production power, and defrosting interval duration, but does not meet the condition of the fan input power. This indicates that fins of the unit have unevenly distributed frost layers, and some fins have been frosted up or have relatively thin frost layers, which has affected unit heat production and safe operation. Therefore, when this condition combination is met, the unit enters defrosting.

(2) A second defrosting determining condition combination: the unit meets both defrosting determining conditions corresponding to the fan input power and the compressor suction temperature, and the unit does not meet defrosting determining conditions corresponding to the compressor suction pressure, the unit heat production power, and interval duration of adjacent defrosting periods.

In this condition combination, the unit needs to meet both the conditions of the fan input power and the compressor suction temperature, but does not meet the conditions of the compressor suction pressure, the unit heat production power, and the defrosting interval duration. This indicates that fins of the unit have evenly distributed frost layers and a frosting speed is very fast. Therefore, when the condition combination is met, the unit enters defrosting to avoid that the frost layer becomes frozen and cannot be cleanly removed, thereby solving the frosting problem.

(3) A third defrosting determining condition combination: the unit meets both defrosting determining conditions corresponding to the fan input power and the compressor suction pressure, and the unit does not meet defrosting determining conditions corresponding to the compressor suction temperature, the unit heat production power, and interval duration of adjacent defrosting periods.

In this condition combination, the unit needs to meet both the conditions of the fan input power and the compressor suction pressure, but does not meet the conditions of the compressor suction temperature, the unit heat production power, and the defrosting interval duration. This indicates that fins of the unit have evenly distributed frost layers and a frosting speed is very fast. Therefore, when the condition combination is met, the unit enters defrosting to avoid that the frost layer becomes frozen and cannot be cleanly removed, thereby solving the frosting problem.

(4) A fourth defrosting determining condition combination: the unit meets both defrosting determining conditions corresponding to the fan input power and the unit heat production power, and the unit does not meet defrosting determining conditions corresponding to the compressor suction temperature, the compressor suction pressure, and interval duration of adjacent defrosting periods.

In this condition combination, the unit needs to meet both the conditions of the fan input power and the unit heat production power, but does not meet the conditions of the compressor suction temperature, the compressor suction pressure, and the defrosting interval duration. This indicates that fins of the unit have evenly distributed frost layers and a frosting speed is very fast. Therefore, when the condition combination is met, the unit enters defrosting to avoid that the frost layer becomes frozen and cannot be cleanly removed, thereby solving the frosting problem.

In this example, it is assumed that a flag bit corresponding to the fan input power is A, a flag bit corresponding to the compressor suction temperature is B, a flag bit corresponding to the compressor suction pressure is C, a flag bit corresponding to the unit heat production power is D, and a flag bit corresponding to the defrosting interval duration is E. In this case, values of the flag bits corresponding to the foregoing four combination conditions are shown in the following Table 1.

Table 1

| | Flag bit A | Flag bit B | Flag bit C | Flag bit D | Flag bit E | Whether to defrost |
|---|---|---|---|---|---|---|
| First defrosting determining condition combination | 0 | 1 | 1 | 1 | 1 | Yes |
| Second defrosting determining condition combination | 1 | 1 | 0 | 0 | 0 | Yes |
| Third defrosting determining condition combination | 1 | 0 | 1 | 0 | 0 | Yes |
| Fourth defrosting determining condition combination | 1 | 0 | 0 | 1 | 0 | Yes |

103. If the current heat pump meets the defrosting entry condition, enter a heat pump defrosting time sequence.

In this example, when the heat pump meets the defrosting determining condition corresponding to any of the foregoing combinations, the defrosting entry condition is met, so that the heat pump enters the heat pump defrosting time sequence.

In this example, multiple defrosting determining parameters are specified in advance, and a defrosting determining condition and a flag bit corresponding to each defrosting determining parameter are specified. A flag bit value corresponding to each defrosting determining parameter is collected in real time to determine whether a current heat pump meets a defrosting entry condition, and if the current heat pump meets the defrosting entry condition, a heat pump defrosting time sequence is directly entered. The defrosting entry condition specified in this example meets multiple working conditions of heat pump defrosting, avoids mis-determining, improves precision of defrosting detection, and improves work efficiency of the heat pump.

104. After the heat pump defrosting time sequence is entered, detect compressor discharge pressure and compressor suction pressure at preset interval duration, and calculate a pressure difference between the compressor discharge pressure and the compressor suction pressure.

105. Dynamically adjust operation manners of a compressor, a fan, and an electronic expansion valve according to the pressure difference in the heat pump defrosting time sequence.

In this example, the heat pump unit includes a discharge pressure sensor on a compressor discharge pipe, and an air return pressure sensor on a compressor air return pipe. A permanent magnet synchronous motor compressor is used. The compressor controls a rotation speed by using a permanent magnet synchronous motor drive plate. An evaporator refers to a fin type heat exchanger for heat exchange with the air side, and a condenser refers to a plate type or shell type heat exchanger for heat exchange with the water side.

When the heat pump operates in a heating mode and needs to be defrosted by a countercurrent of a refrigerant, a direction switching operation of a four-way valve is involved. During heating operation of the heat pump, the compressor suction pressure is very low, and the compressor discharge pressure is very high. In addition, there are explicit requirements on the discharge pressure and the suction pressure during direction switching of the four-way valve. When the pressure difference is too small (usually less than 3 bar), switching fails, or the air is leaked between air discharging and air suction. When the pressure difference is too large (usually greater than 30 bar), a switching torque is too high, which causes large noise. In serious cases, an internal mechanical structure of the four-way valve would be damaged.

Therefore, in this example, after the heat pump defrosting time sequence is entered, heat pump system pressure is detected in real time by using the discharge pressure sensor and the suction pressure sensor, and the direction switching process of the four-way valve is controlled through speed adjustment in cooperation with an inverter compressor, thereby reducing noise in the defrosting process and ensuring safety of the four-way valve structure.

In this example, the system pressure is detected in real time by using the discharge pressure sensor and the suction pressure sensor, and speed adjustment is performed in cooperation with the inverter compressor. On one hand, during direction switching, the four-way valve can always be under safe pressure, thereby increasing a switching success rate and a service life of the four-way valve. On the other hand, by detecting the compressor suction pressure in real time and controlling the rotation speed of the compressor, the compressor suction pressure is not drawn to be too low at the moment of switching of the four-way valve during defrosting, thereby improving reliability of the compressor.

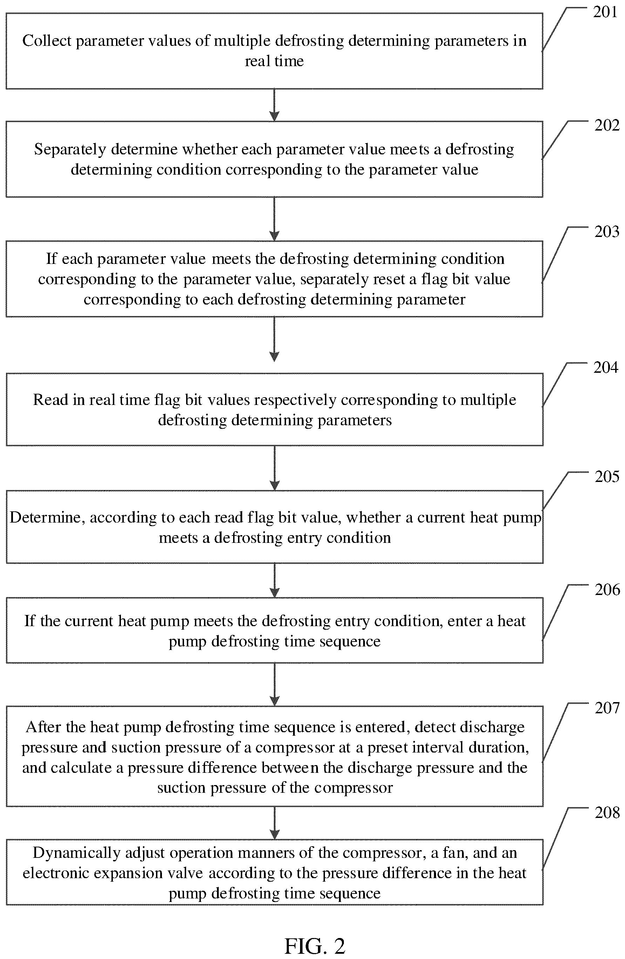

Referring to FIG. 2, another heat pump defrosting control method according to an example not being part of the present invention includes the following steps.

201. Collect parameter values of multiple defrosting determining parameters in real time.

In this example, to accurately determine a working condition about whether a heat pump needs to be defrosted, multiple defrosting determining parameters are used to perform comprehensive determining. In an example, preferred defrosting determining parameters include:

(1) Fan input power

A fan is a fan that forms a wind field on an evaporator of a heat pump system. The fan includes a direct current permanent magnet synchronous motor, a fan blade, and a permanent magnet synchronous motor variable frequency drive plate. The fan input power refers to real-time input power of the fan during operation detected by the permanent magnet synchronous motor variable frequency drive plate. A power value is transmitted to a main control chip of the heat pump by using an RS485 bus. Therefore, the power value can be obtained in real time.

(2) Compressor suction temperature

A compressor is a fluid machine that raises a low-pressure gas to a high-pressure gas, and the compressor suction temperature can be detected by using a disposed temperature sensor.

(3) Compressor suction pressure

Certain pressure is generated when the compressor sucks the air. Therefore, a pressure sensor can detect the compressor suction pressure.

(4) Unit heat production power

A unit heat production amount refers to real-time heat production output power of a unit when the heat pump is operating and heating. The power is obtained by a water flow meter installed on the unit and inlet and outlet temperature sensers of a water-side heat exchanger of the unit. The unit heat production power can be calculated in real time by using the following formula:

$$Q=H*\triangle T*1.163;$$

where Q denotes the heat production power, H denotes a water flow amount of the unit, and $\triangle T$ denotes a temperature difference between a water outlet temperature and a water inlet temperature of the heat exchanger.

(5) Unit cumulative operation duration

Defrosting interval duration is one of defrosting determining parameters, and is specifically measured by using unit cumulative operation duration after a defrosting period starts or ends.

Optionally, in an example, step 201 specifically includes:

collecting in real time the fan input power, the compressor suction temperature, the compressor suction pressure, the unit heat production power, when each defrosting period starts or ends, collecting statistics on unit cumulative operation duration in real time, recording unit heat production power after a unit stably operates for preset duration after each defrosting period ends, and using the recorded unit heat production power as a preset value of unit heat production power corresponding to a next defrosting period.

In this example, the unit cumulative operation duration and parameters (the fan input power, the compressor suction temperature, and the compressor suction pressure) that are greatly affected by an ambient temperature may be fixedly specified after a test in advance. However, the unit heat production power needs to be dynamically specified, and unit heat production power corresponding to each defrosting determining condition is different. Specifically, unit heat production power obtained after the unit stably operates for preset duration after a previous defrosting period ends is used as a preset value of unit heat production power corresponding to a next defrosting period.

The defrosting determining parameters selected in this example can meet multiple working conditions of heat pump defrosting, so as to avoid determining missing with a single parameter and mis-determining with multiple parameters, thereby improving accuracy of heat pump defrosting determining.

202. Separately determine whether each parameter value meets a defrosting determining condition corresponding to the parameter value.

In this example, each defrosting determining parameter is corresponding to one defrosting determining condition, and setting of each defrosting determining condition is not limited.

In an example, the following defrosting determining conditions are specifically preset:

A. A defrosting determining condition corresponding to the fan input power is: whether the fan input power is greater than a first preset percentage of a preset value of fan input power corresponding to a current ambient temperature;

B. a defrosting determining condition corresponding to the compressor suction temperature is: whether the compressor suction temperature is less than a preset value of a compressor suction temperature corresponding to the current ambient temperature;

C. a defrosting determining condition corresponding to the compressor suction pressure is: whether the compressor suction pressure is less than a preset value of compressor suction pressure corresponding to the current ambient temperature;

D. a defrosting determining condition corresponding to the unit heat production power is: whether the unit heat production power is less than a second preset percentage of a preset value of unit heat production power corresponding to a previous defrosting period; and

E. a defrosting determining condition corresponding to the defrosting interval duration is: whether the unit cumulative operation duration after a defrosting period starts or ends reaches a preset value of the interval duration.

In an example, step 202 specifically includes:

(1) determining, according to a first preset mapping relationship between an ambient temperature and fan input power, whether current fan input power is greater than a first preset percentage of a preset value of fan input power corresponding to a current ambient temperature.

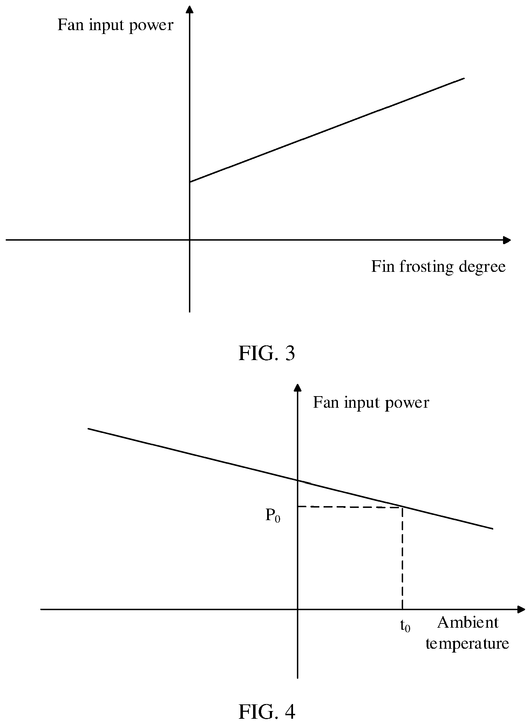

Generally, when the heat pump operates in a frosting-prone working condition, evaporator fins accumulate a frost layer. Consequently, when the air flows through the evaporator fins, wind resistance becomes large, and an air volume flowing into an air chamber decreases. In this case, an air pressure difference between internal and external air pressure of the air chamber of the evaporator increases. When a rotation speed of the fan remains unchanged, the fan input power increases, and a change trend of the fan input power and a frosting degree of the evaporator fins is shown in FIG. 3.

In addition, atmospheric air density varies at different ambient temperatures. Therefore, when the fan keeps the same rotation speed, the fan input power also varies at different ambient temperatures. Generally, in a case of normal and stable atmospheric pressure, when the ambient temperature decreases and the rotation speed of the fan remains unchanged, the fan input power also increases, that is, the fan input power is greatly affected by the ambient temperature, and the ambient temperature is also related to heat pump frosting.

In an example, the following measurement manner is used to obtain the first preset mapping relationship between the fan input power and the ambient temperature, which is specifically as follows:

a. During measurement, keep the fan operating at the same rotation speed and turn off the compressor.

b. Adjust the ambient temperature and record the current ambient temperature and the fan input power corresponding to the current ambient temperature at a preset temperature interval.

c. Generate the first preset mapping relationship according to the recorded ambient temperature and fan input power.

The fan is kept at the same rotation speed, so that when the compressor is not turned on (it is ensured that the unit will not be frosted up), the fan input power is preferably measured once at an interval of 1°C of the ambient temperature from -40°C-53°C to obtain an impact curve of the ambient temperature on the fan input power when the fan is not frosted up, that is, the first preset mapping relationship. Specifically, as shown in FIG. 4, the curve is preset in a main control program of the heat pump and is used as a start reference determining value of the unit using the fan input power for defrosting at different ambient temperatures.

(2) determining, according to a second preset mapping relationship between an ambient temperature and a compressor suction temperature, whether a current compressor suction temperature is less than a preset value of a compressor suction temperature corresponding to the current ambient temperature.

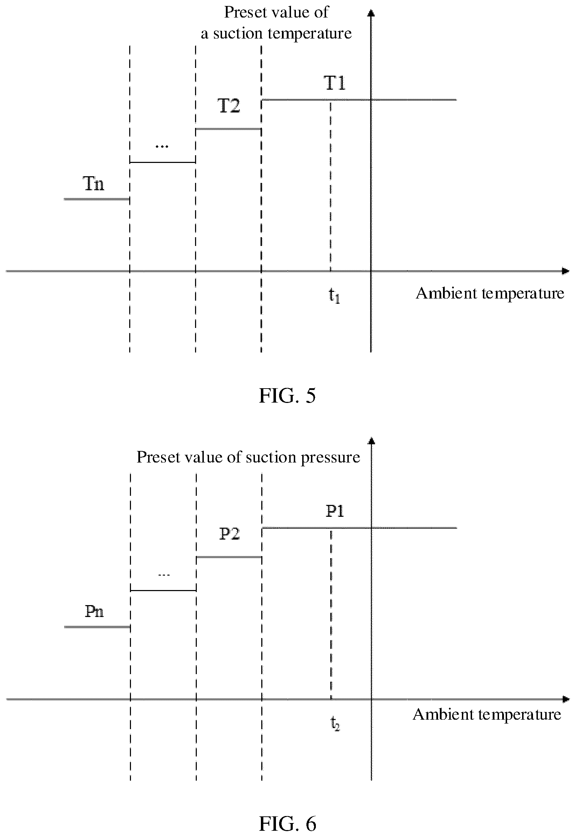

In this example, the second preset mapping relationship is obtained through test measurement. A specific measurement manner is as follows: When heat pump defrosting is performed, starting from a specified maximum ambient temperature or a specified minimum ambient temperature, the ambient temperature is continuously lowered or raised, and the compressor suction temperature is detected. If a change of the compressor suction temperature in a certain ambient temperature interval is less than a specified temperature (for example, 0.5°C), an average value of compressor suction temperatures in the ambient temperature interval is used as a preset value of the compressor suction temperature corresponding to the ambient temperature interval. In an example, preferably, a preset value range of the compressor suction temperature is [-45°C, 0°C], and a corresponding ambient temperature range is [-45°C, 12°C], as shown in FIG. 5.

(3) determining, according to a third preset mapping relationship between an ambient temperature and compressor suction pressure, whether current compressor suction pressure is less than a preset value of compressor suction pressure corresponding to the current ambient temperature.

In this example, the third preset mapping relationship is obtained through test measurement. A specific measurement manner is as follows: When heat pump defrosting is performed, starting from a specified maximum ambient temperature or a specified minimum ambient temperature, the ambient temperature is continuously lowered or raised, and the compressor suction pressure is detected. If a change of the compressor suction pressure in a certain ambient temperature interval is less than specified pressure (for example, 0.1 bar), an average value of compressor suction pressure in the ambient temperature interval is used as a preset value of the compressor suction pressure corresponding to the ambient temperature interval. In an example, preferably, a preset value range of the compressor suction pressure is [0.8 bar, 5 bar], and a corresponding ambient temperature range is [-45°C, 12°C], as shown in FIG. 6.

(4) determining, according to a preset value of unit heat production power corresponding to a previous defrosting period, whether current unit heat production power is less than a second preset percentage of the preset value of the unit heat production power corresponding to the previous defrosting period.

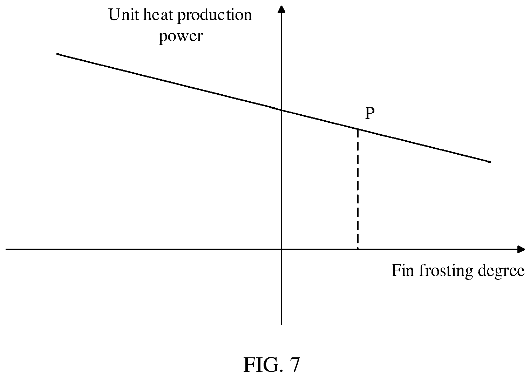

Generally, when the evaporator is frosted up, as the fan input power increases and an air volume decreases, and a heat insulation function of a frost layer is added, heat exchange efficiency of the evaporator is decreased, which inevitably leads to a decrease in heat production power of the heat pump system. A change trend of the unit heat production power and the frosting degree of the evaporator fins is shown in FIG. 7.

Therefore, in this example, a current unit heat production power value is recorded after the heat pump stably operates for n minutes (for example, 5 minutes) after each time of defrosting, and this value is used as a reference value for determining unit heat production power in a next defrosting period.

(5) determining, according to a preset value of interval duration of adjacent defrosting periods, whether unit cumulative operation duration after a defrosting period starts or ends reaches the preset value of the interval duration.

In addition to the foregoing four defrosting determining parameters, defrosting interval duration is further introduced in this example as a defrosting determining parameter. The minimum interval duration (for example, 45 minutes) between two consecutive times of defrosting is tested in advance, and then the minimum interval duration is used as a reference value of the defrosting interval duration.

203. If each parameter value meets the defrosting determining condition corresponding to the parameter value, separately reset a flag bit value corresponding to each defrosting determining parameter.

In this example, to help the machine to quickly perform defrosting condition determining, a corresponding determining flag bit is respectively specified for the defrosting determining condition corresponding to each defrosting determining parameter, and when a defrosting determining parameter value meets the corresponding defrosting determining condition, a value of the corresponding flag bit is reset. For example, when a certain defrosting determining parameter value meets a corresponding defrosting determining condition, a value of a corresponding flag bit is set to 1. After defrosting ends, the value of the flag bit is reset.

It is assumed that a flag bit corresponding to the fan input power is A, a flag bit corresponding to the compressor suction temperature is B, a flag bit corresponding to the compressor suction pressure is C, a flag bit corresponding to the unit heat production power is D, and a flag bit corresponding to the defrosting interval duration is E.

When collected fan input power is greater than the first preset percentage of the preset value of the fan input power corresponding to the current ambient temperature, a value of flag bit A is set to 1; when a collected compressor suction temperature is less than the preset value of the compressor suction temperature corresponding to the current ambient temperature, a value of flag bit B is set to 1; when collected compressor suction pressure is less than the preset value of the compressor suction pressure corresponding to the current ambient temperature, a value of flag bit C is set to 1; when collected unit heat production power is less than the second preset percentage of the preset value of the unit heat production power corresponding to the previous defrosting period, a value of the flag bit D is set to 1; and when the unit cumulative operation duration after a defrosting period starts or ends reaches the preset value of the defrosting interval duration, a value of the flag bit E is set to 1. When defrosting ends, all the flag bits A, B, C, D, and E are reset, and then defrosting is determined in a next period.

In this example, the first preset percentage is preferably any value between 30%-50%. As shown in FIG. 4, it is assumed that fan input reference power corresponding to ambient temperature $t_0$ is $P_0$, if fan input power collected at ambient temperature $t_0$ is greater than 35% of reference power $P_0$, the value of flag bit A is set to 1.

As shown in FIG. 5, it is assumed that a corresponding compressor suction temperature reference value at ambient temperature $t_1$ is T1. If a compressor suction temperature collected at ambient temperature $t_1$ is less than the compressor suction temperature reference value T1, the value of flag bit B is set to 1.

As shown in FIG. 6, it is assumed that a corresponding compressor suction pressure reference value at ambient temperature $t_2$ is P1. If a compressor suction temperature collected at ambient temperature $t_2$ is less than the compressor suction temperature reference value P1, the value of flag bit C is set to 1.

In this example, the second preset percentage is preferably 50%. As shown in FIG. 7, it is assumed that unit heat production power collected after a certain defrosting period ends is P. If the unit heat production power collected after the defrosting period is less than 50% of P, the value of flag bit D is set to 1.

It is assumed that after one time of defrosting occurs, the unit cumulative operation duration exceeds the preset value of the defrosting period interval duration. Then, the value of flag bit E is set to 1.

204. Read in real time flag bit values respectively corresponding to the multiple defrosting determining parameters.

205. Determine, according to each read flag bit value, whether a current heat pump meets a defrosting entry condition.

206. If the current heat pump meets the defrosting entry condition, enter a heat pump defrosting time sequence.

207. After the heat pump defrosting time sequence is entered, detect compressor discharge pressure and compressor suction pressure at preset interval duration, and calculate a pressure difference between the compressor discharge pressure and the compressor suction pressure.

208. Dynamically adjust operation manners of a compressor, a fan, and an electronic expansion valve according to the pressure difference in the heat pump defrosting time sequence.

In this example, multiple defrosting determining parameters are specified in advance, and a defrosting determining condition and a flag bit corresponding to each defrosting determining parameter are specified. A parameter value of each defrosting determining parameter is collected in real time to determine whether each parameter value meets a corresponding defrosting determining condition. If the parameter value meets a defrosting determining condition, a flag bit value corresponding to the defrosting determining condition is reset. Finally, it is determined, according to each flag bit value, whether the current heat pump meets the defrosting entry condition. If the current heat pump meets the defrosting entry condition, the current heat pump directly enters the heat pump defrosting time sequence. The defrosting determining condition specified in this example meets multiple working conditions of heat pump defrosting, avoids misdetermining, improves precision of defrosting detection, and improves work efficiency of the heat pump.

The foregoing examples mainly describe the entry condition for direction switching defrosting based on a four-way valve, and the following further describes a four-way valve control process after the heat pump defrosting time sequence is entered.

In this example, after the heat pump defrosting time sequence is entered, the pressure of the heat pump system is detected in real time by using a discharge pressure sensor and a suction pressure sensor, and a pressure difference $\Delta P$ between the compressor discharge pressure and the compressor suction pressure is calculated. In addition, speed adjustment is performed in cooperation with an inverter compressor in the heat pump defrosting time sequence, so as to control the direction switching process of the four-way valve.

This example further controls the operation manners of the compressor, the fan, and the electronic expansion valve in the heat pump defrosting time sequence, which specifically includes:

1.1. When $\Delta P$ is greater than $P_1$, controlling the compressor to decrease at a uniform speed to the minimum frequency and the fan to increase at a uniform speed to the maximum rotation speed, and controlling the electronic expansion valve to exit heat adjustment and increase by a first preset opening degree;

1.2. when $\Delta P$ is less than or equal to $P_1$ and is greater than or equal to $P_2$, controlling the compressor to decrease at a uniform speed to the minimum frequency and the fan to increase at a uniform speed to the maximum rotation speed, and controlling the electronic expansion valve to maintain a current opening degree;

1.3. when $\Delta P$ is less than $P_2$, turning off the fan, controlling a four-way valve to switch a direction, adjusting the electronic expansion valve to a defrosting opening degree, and keeping the compressor operating at the minimum frequency; and

1.4. when the compressor suction pressure is less than $P_3$, prohibiting the compressor from frequency increasing; and when the compressor suction pressure is greater than or equal to $P_3$, controlling the compressor to increase at a uniform speed to defrosting frequency, where

$P_1$, $P_2$, and $P_3$ are preset pressure thresholds, and $P_3 < P_2 < P_1$; in a frequency increasing process of the compressor, if the compressor suction pressure is less than $P_3$, frequency increasing is stopped, and when the compressor suction pressure is greater than or equal to $P_3$, the compressor is continuously controlled to perform frequency increasing at a uniform speed.

In this example, preferably, $P_1$ is 30 bar, $P_2$ is 25 bar, and $P_3$ is 1.5 bar. The first preset opening degree is preferably 100 steps.

In this example, when $\Delta P > 30$ bar, the compressor is controlled to decrease at a speed of 1 Hz/S to the minimum frequency, the rotation speed of the fan is controlled to increase at a speed of 1 Hz/S to the maximum rotation speed, and the electronic expansion valve is controlled to exit heat adjustment; and 100 steps are directly added to an existing opening degree.

When 25 bar$\leq \Delta P \leq 30$ bar, the compressor is controlled to decrease at a speed of 1 Hz/S to the minimum frequency, the rotation speed of the fan is controlled to increase at a speed of 1 Hz/S to the maximum rotation speed, and the electronic expansion valve is controlled to maintain the current opening degree.

When $\Delta P < 25$ bar, the fan is directly stopped, the four-way valve is controlled to switch a direction, the electronic expansion valve is controlled to a defrosting opening degree, the compressor is controlled to maintain the minimum frequency, and the compressor suction pressure is detected in real time. When it is detected that the compressor suction pressure is less than 1.5 bar, the compressor is not allowed to increase frequency. When it is detected that the compressor suction pressure is greater than or equal to 1.5 bar, the compressor is allowed to increase at a speed of 1 Hz/S to the defrosting frequency. When the compressor suction pressure is less than 1.5 bar during frequency increasing, frequency increasing is stopped until the compressor suction pressure is greater than or equal to 1.5 bar.

The above control can reduce noise during direction switching defrosting of the four-way valve, protect the compressor at low pressure, and reduce a failure rate of the compressor.

Optionally, in an example, the operation manners of the compressor, the fan, and the electronic expansion valve are further controlled in a defrosting exit time sequence, which specifically includes

2.1. when the defrosting time sequence is exited, and $\Delta P$ is greater than $P_1$, controlling the compressor to decrease at a uniform speed to the minimum frequency, and the electronic expansion valve to decrease by a second preset opening degree, where the first preset opening degree is less than the second preset opening degree;

2.2. when $\Delta P$ is less than or equal to $P_1$ and is greater than or equal to $P_2$, controlling the compressor to decrease at a uniform speed to the minimum frequency, and the electronic expansion valve to decrease by the first preset opening degree; and

2.3. when $\Delta P$ is less than $P_2$, controlling the four-way valve to switch a direction, turning on the fan, controlling the fan to increase at a uniform speed to the maximum rotation speed, adjusting the electronic expansion valve to an initial opening degree, and controlling the compressor to increase at a uniform speed to a preset target frequency from the minimum frequency.

In this example, a preset temperature threshold is specifically obtained through a test. The second preset opening degree is preferably 200 steps.

When a temperature of an evaporator fin coil is greater than the temperature threshold, the heat pump is controlled to enter the defrosting exit time sequence. When $\Delta P > 30$ bar, the compressor is controlled to decrease at a speed of 1 Hz/S to the minimum frequency, and the electronic expansion valve is controlled to directly decrease the current opening degree by 200 steps. When 25 bar$\leq \Delta P \leq 30$ bar, the compressor is controlled to decrease at a speed of 1 Hz/S to the minimum frequency, and the electronic expansion valve is controlled to directly decrease the current opening degree by 100 steps. When $\Delta P < 25$ bar, the four-way valve is controlled to switch a direction, the fan is turned on to increase at a speed of 1 Hz/S to the maximum rotation speed, and the electronic expansion valve is controlled to return to an initial opening degree t. The compressor is controlled to increase at a speed of 1 Hz/S to a target frequency starting from the minimum frequency, where the target frequency may be specified by the user or preset by the system. After the above control steps are performed, the unit starts to operate in a heating mode again, and operates according to a heating mode program.

In this example, the system pressure is detected in real time by using the discharge pressure sensor and the suction pressure sensor, and speed adjustment is performed in cooperation with the inverter compressor. On one hand, during direction switching, the four-way valve can always be under safe pressure, thereby increasing a switching success rate and a service life of the four-way valve. On the other hand, by detecting the compressor suction pressure in real time and controlling the rotation speed of the compressor, the compressor suction pressure is not drawn to be too low at the moment of switching of the four-way valve during defrosting, thereby improving reliability of the compressor.

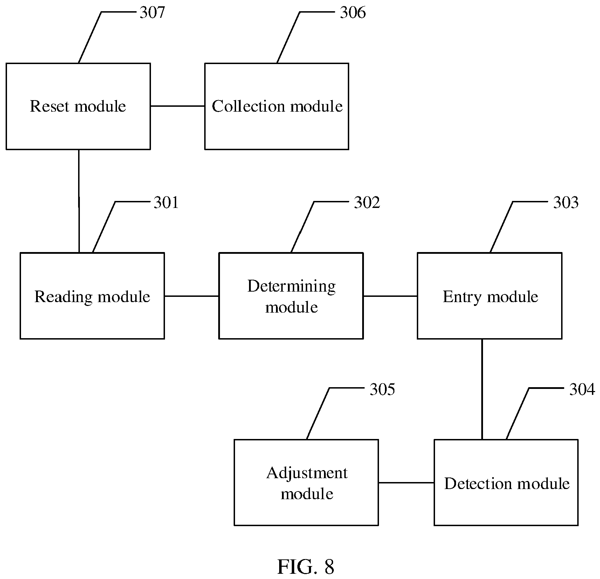

The foregoing describes the heat pump defrosting control method in an example not being part of the present invention. The following describes a heat pump defrosting control apparatus in an example not being part of the present invention. Referring to FIG. 8, a heat pump defrosting control apparatus in an example not being part of the present invention includes:

a reading module 301, configured to read in real time flag bit values respectively corresponding to multiple defrosting determining parameters;

a determining module 302, configured to determine, according to each read flag bit value, whether a current heat pump meets a defrosting entry condition;

an automated module 303, configured to: if the current heat pump meets the defrosting entry condition, enter a heat pump defrosting time sequence;

a detection module 304, configured to: after the heat pump defrosting time sequence is entered, detect compressor discharge pressure and compressor suction pressure at preset interval duration, and calculate a pressure difference between the compressor discharge pressure and the compressor suction pressure; and

an adjustment module 305, configured to dynamically adjust operation manners of a compressor, a fan, and an electronic expansion valve according to the pressure difference in the heat pump defrosting time sequence.

Optionally, in an example, the heat pump defrosting control apparatus further includes:

a collection module 306, configured to collect parameter values of the multiple defrosting determining parameters in real time;

the determining module 302 is further configured to separately determine whether each parameter value meets a defrosting determining condition corresponding to the parameter value; and

a reset module 307, configured to: if each parameter value meets the defrosting determining condition corresponding to the parameter value, separately reset a flag bit value corresponding to each defrosting determining parameter.

Optionally, the defrosting determining parameters include: fan input power, a compressor suction temperature, compressor suction pressure, unit heat production power, and unit cumulative operation duration after a defrosting period starts or ends.

Optionally, the collection module 306 is specifically configured to: collect in real time the fan input power, the compressor suction temperature, the compressor suction pressure, the unit heat production power, when each defrosting period starts or ends, collect statistics on unit cumulative operation duration in real time, record unit heat production power after a unit stably operates for preset duration after each defrosting period ends, and use the recorded unit heat production power as a preset value of unit heat production power corresponding to a next defrosting period.

Optionally, the determining module 302 is specifically configured to:

determine, according to a first preset mapping relationship between an ambient temperature and fan input power, whether current fan input power is greater than a first preset percentage of a preset value of fan input power corresponding to a current ambient temperature;

determine, according to a second preset mapping relationship between an ambient temperature and a compressor suction temperature, whether a current compressor suction temperature is less than a preset value of a compressor suction temperature corresponding to the current ambient temperature;

determine, according to a third preset mapping relationship between an ambient temperature and compressor suction pressure, whether current compressor suction pressure is less than a preset value of compressor suction pressure corresponding to the current ambient temperature;

determine, according to a preset value of unit heat production power corresponding to a previous defrosting period, whether current unit heat production power is less than a second preset percentage of the preset value of the unit heat production power corresponding to the previous defrosting period; and

determine, according to a preset value of interval duration of adjacent defrosting periods, whether unit cumulative operation duration after a defrosting period starts or ends reaches the preset value of the interval duration.

Optionally, the first preset mapping relationship is obtained in the following measurement manner: during measurement, keeping the fan operating at the same rotation speed and turning off the compressor; adjusting the ambient temperature and recording the current ambient temperature and the fan input power corresponding to the current ambient temperature at a preset temperature interval; and generating the first preset mapping relationship according to the recorded ambient temperature and fan input power.

Optionally, the determining module 302 is further specifically configured to: separately determine whether each read flag bit value is correspondingly the same as a flag bit value of any combination in a preset defrosting determining condition combination set; and if each flag bit value is correspondingly the same as a flag bit value of any combination, determine that the current heat pump meets the defrosting entry condition.

Optionally, the defrosting determining condition combination set includes at least:

a first defrosting determining condition combination: the unit meets all defrosting determining conditions corresponding to the compressor suction pressure, the compressor suction temperature, the unit heat production power, and interval duration of adj acent defrosting periods, and the unit does not meet a defrosting determining condition corresponding to the fan input power;

a second defrosting determining condition combination: the unit meets both defrosting determining conditions corresponding to the fan input power and the compressor suction temperature, and the unit does not meet defrosting determining conditions corresponding to the compressor suction pressure, the unit heat production power, and interval duration of adjacent defrosting periods;

a third defrosting determining condition combination: the unit meets both defrosting determining conditions corresponding to the fan input power and the compressor suction pressure, and the unit does not meet defrosting determining conditions corresponding to the compressor suction temperature, the unit heat production power, and interval duration of adjacent defrosting periods; and

a fourth defrosting determining condition combination: the unit meets both defrosting determining conditions corresponding to the fan input power and the unit heat production power, and the unit does not meet defrosting determining conditions corresponding to the compressor suction temperature, the compressor suction pressure, and interval duration of adjacent defrosting periods.

In this example, multiple defrosting determining parameters are specified in advance, and a defrosting determining condition corresponding to each defrosting determining parameter and a flag bit corresponding to each defrosting determining condition are specified. A parameter value of each defrosting determining parameter is collected in real time to determine whether each parameter value meets a corresponding defrosting determining condition. If the parameter value meets a defrosting determining condition, a flag bit value corresponding to the defrosting determining condition is reset. Finally, it is determined, according to each flag bit value, whether the current heat pump meets the defrosting entry condition. If the current heat pump meets the defrosting entry condition, the current heat pump directly enters the heat pump defrosting time sequence. The defrosting determining condition specified in this example meets multiple working conditions of heat pump defrosting, avoids mis-determining, improves precision of defrosting detection, and improves work efficiency of the heat pump.

Optionally, in an example, the adjustment module 305 is specifically configured to: in the heat pump defrosting time sequence, when $\Delta P$ is greater than $P_1$, control the compressor to decrease at a uniform speed to the minimum frequency and the fan to increase at a uniform speed to the maximum rotation speed, and control the electronic expansion valve to exit heat adjustment and increase by a first preset opening degree; when $\Delta P$ is less than or equal to $P_1$ and is greater than or equal to $P_2$, control the compressor to decrease at a uniform speed to the minimum frequency and the fan to increase at a uniform speed to the maximum rotation speed, and control the electronic expansion valve to maintain a current opening degree; and when $\Delta P$ is less than $P_2$, turn off the fan, control a four-way valve to switch a direction, adjust the electronic expansion valve to a defrosting opening degree, and keep the compressor operating at the minimum frequency, where $\Delta P$ is the pressure difference between the compressor discharge pressure and the compressor suction pressure, $P_1$, $P_2$, and $P_3$ are preset pressure thresholds, and $P_3<P_2<P_1$; in a frequency increasing process of the compressor, if the compressor suction pressure is less than $P_3$, frequency increasing is stopped, and when the compressor suction pressure is greater than or equal to $P_3$, the compressor is continuously controlled to perform frequency increasing at a uniform speed.

Optionally, in an example, the detection module 304 is further specifically configured to: after the heat pump defrosting time sequence is entered, detect a fin coil temperature of an evaporator in real time, and determine whether the fin coil temperature is greater than a preset temperature threshold; the <u>automated</u> module 303 is further configured to: if the fin coil temperature is greater than the preset temperature threshold, enter a defrosting exit time sequence; and the adjustment module 305 is further configured to dynamically adjust the operation manners of the compressor, the fan, and the electronic expansion valve according to the pressure difference in the defrosting exit time sequence.

Optionally, in an example, the adjustment module 305 is specifically configured to: in the defrosting exit time sequence, when $\Delta P$ is greater than $P_1$, control the compressor to decrease at a uniform speed to the minimum frequency, and the electronic expansion valve to decrease by a second preset opening degree, where the first preset opening degree is less than the second preset opening degree; when $\Delta P$ is less than or equal to $P_1$ and is greater than or equal to $P_2$, control the compressor to decrease at a uniform speed to the minimum frequency, and the electronic expansion valve to decrease by the first preset opening degree; and when $\Delta P$ is less than $P_2$, control the four-way valve to switch a direction, turn on the fan, control the fan to increase at a uniform speed to the maximum rotation speed, adjust the electronic expansion valve to an initial opening degree, and control the compressor to increase at a uniform speed to a preset target frequency from the minimum frequency.

In this example, the system pressure is detected in real time by using the discharge pressure sensor and the suction pressure sensor, and speed adjustment is performed in cooperation with the inverter compressor. On one hand, during direction switching, the four-way valve can always be under safe pressure, thereby increasing a switching success rate and a service life of the four-way valve. On the other hand, by detecting the compressor suction pressure in real time and controlling the rotation speed of the compressor, the compressor suction pressure is not drawn to be too low at the moment of switching of the four-way valve during defrosting, thereby improving reliability of the compressor.

FIG. 8 describes the heat pump defrosting control apparatus in an example not being part of the present invention in detail from a perspective of a modular functional entity. The following describes a heat pump defrosting control device in an example not being part of the present invention in detail from a perspective of hardware processing.

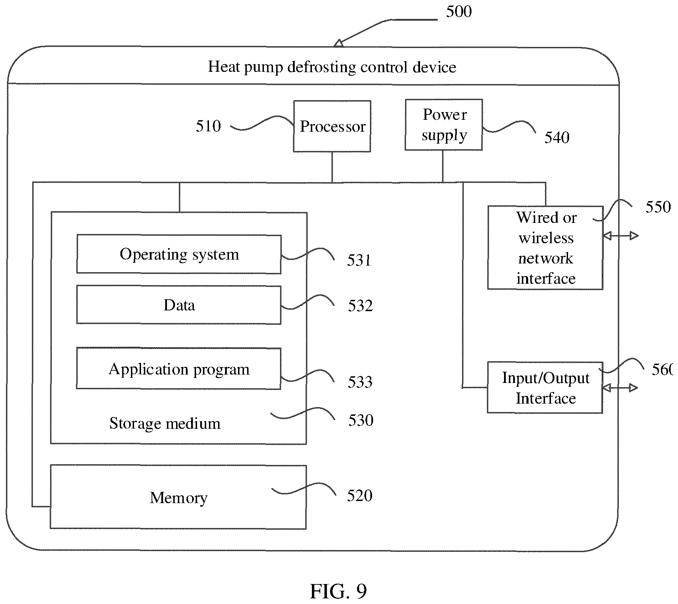

FIG. 9 is a schematic structural diagram of a heat pump defrosting control device according to an example not being part of the present invention. The heat pump defrosting control device 500 may vary greatly according to configuration or performance, and may include one or more processors (central processing unit, CPU) 510 (for example, one or more processors) and a memory 520, and one or more storage media 530 (for example, one or more mass storage devices) storing an application program 533 or data 532. The memory 520 and the storage medium 530 may be used for transient storage or persistent storage. The program stored in the storage medium 530 may include one or more modules (not shown in the figure), and each module may include a series of instruction operations for the heat pump defrosting control device 500. Further, the processor 510 may be configured to communicate with the storage medium 530, and perform a series of instruction operations in the storage medium 530 on the heat pump defrosting control device 500.

The heat pump defrosting control device 500 may further include one or more power supplies 540, one or more wired or wireless network interfaces 550, one or more input/output interfaces 560, and/or one or more operating systems 531, such as Windows Server, Mac OS X, Unix, Linux, and FreeBSD. A person skilled in the art may understand that a structure of the heat pump defrosting control device shown in FIG. 9 does not constitute a limitation on the heat pump defrosting control device, which may include more or fewer components than those shown in the figure, or combine some components, or have different component arrangements.

An example not being part of the present invention further provides a heat pump defrosting control device, where the heat pump defrosting control device includes a memory and a processor, the memory stores computer readable instructions, and when the computer readable instructions are executed by the processor, the processor performs the steps of the heat pump defrosting control method in the foregoing examples.

An example not being part of the present invention further provides a computer readable storage medium. The computer readable storage medium may be a non-volatile computer readable storage medium. The computer readable storage medium may also be a volatile computer readable storage medium. The computer readable storage medium stores instructions. When the instructions run on a computer, the computer performs the steps of the heat pump defrosting control method.

It may be clearly understood by persons skilled in the art that, for the purpose of convenient and brief description, for a detailed working process of the foregoing system, apparatus, and unit, refer to a corresponding process in the foregoing method examples, and details are not described herein again.

When the integrated unit is implemented in the form of a software functional unit and sold or used as an independent product, the integrated unit may be stored in a computer readable storage medium. Based on such an understanding, the technical solutions or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the examples not being part of the present invention. The storage medium includes: any medium that can store program code, such as a USB flash drive, a removable hard disk, a read-only memory (read-only memory, ROM), a random access memory (random access memory, RAM), a magnetic disk, or an optical disc.

**Claims**

1. A heat pump defrosting control method, wherein the heat pump defrosting control method comprises:

   reading in real time flag bit values respectively corresponding to multiple defrosting determining parameters (204);
   determining, according to each read flag bit value, whether a current heat pump meets a defrosting entry condition (205);
   if the current heat pump meets the defrosting entry condition, entering a heat pump defrosting time sequence (206);
   after the heat pump defrosting time sequence is entered, detecting compressor discharge pressure and compressor suction pressure at preset interval duration, and calculating a pressure difference between the compressor discharge pressure and the compressor suction pressure (207); and

dynamically adjusting operation manners of a compressor, a fan, and an electronic expansion valve according to the pressure difference in the heat pump defrosting time sequence (208), and wherein

before the reading in real time flag bit values respectively corresponding to multiple defrosting determining parameters, further comprising: collecting parameter values of the multiple defrosting determining parameters in real time (201); separately determining whether each parameter value meets a defrosting determining condition corresponding to the parameter value (202); and if each parameter value meets the defrosting determining condition corresponding to the parameter value, separately resetting a flag bit value corresponding to each defrosting determining parameter (203), wherein

the defrosting determining parameters comprise: fan input power, a compressor suction temperature, compressor suction pressure, unit heat production power, and unit cumulative operation duration after a defrosting period starts or ends;

the collecting parameter values of the multiple defrosting determining parameters in real time comprises: collecting in real time the fan input power, the compressor suction temperature, the compressor suction pressure, the unit heat production power, when each defrosting period starts or ends, collecting statistics on unit cumulative operation duration in real time, recording unit heat production power after a unit stably operates for preset duration after each defrosting period ends, and using the recorded unit heat production power as a preset value of unit heat production power corresponding to a next defrosting period;

the separately determining whether each parameter value meets the defrosting determining condition corresponding to the parameter value comprises:

determining, according to a first preset mapping relationship between an ambient temperature and fan input power, whether current fan input power is greater than a first preset percentage of a preset value of fan input power corresponding to a current ambient temperature;

determining, according to a second preset mapping relationship between an ambient temperature and a compressor suction temperature, whether a current compressor suction temperature is less than a preset value of a compressor suction temperature corresponding to the current ambient temperature;

determining, according to a third preset mapping relationship between an ambient temperature and compressor suction pressure, whether current compressor suction pressure is less than a preset value of compressor suction pressure corresponding to the current ambient temperature;

determining, according to a preset value of unit heat production power corresponding to a previous defrosting period, whether current unit heat production power is less than a second preset percentage of the preset value of the unit heat production power corresponding to the previous defrosting period; and

determining, according to a preset value of interval duration of adj acent defrosting periods, whether unit cumulative operation duration after a defrosting period starts or ends reaches the preset value of the interval duration;

wherein the first preset mapping relationship is obtained in the following measurement manner:

during measurement, keeping the fan operating at the same rotation speed and turning off the compressor; adjusting the ambient temperature from -40°C-53°C and recording the current ambient temperature and the fan input power corresponding to the current ambient temperature at a preset temperature interval; and generating the first preset mapping relationship according to the recorded ambient temperature and fan input power, wherein the fan input power is measured once at an interval of 1°C of the ambient temperature from -40°C-53°C to obtain an impact curve of the ambient temperature on the fan input power when the fan is not frosted up, that is, the first preset mapping relationship; the impact curve is preset in a main control program of the heat pump and is used as a start reference determining value of the unit using the fan input power for defrosting at different ambient temperatures.

2. The heat pump defrosting control method according to claim 1, wherein the dynamically adjusting operation manners of a compressor, a fan, and an electronic expansion valve according to the pressure difference in the heat pump defrosting time sequence comprises:

in the heat pump defrosting time sequence, when the pressure difference $\Delta P$ is greater than $P_1$, controlling the compressor to decrease at a uniform speed to the minimum frequency and the fan to increase at a uniform speed to the maximum rotation speed, and controlling the electronic expansion valve to exit heat adjustment and increase by a first preset opening degree;

when the pressure difference $\Delta P$ is less than or equal to $P_1$ and is greater than or equal to $P_2$, controlling the compressor to decrease at a uniform speed to the minimum frequency and the fan to increase at a uniform speed to the maximum rotation speed, and controlling the electronic expansion valve to maintain a current opening degree; and

when the pressure difference

$\Delta P$ is less than $P_2$, turning off the fan, controlling a four-way valve to switch a direction toward a defrosting entry mode through speed adjustment in cooperation with an inverter compressor, adjusting the electronic expansion valve to a defrosting opening degree, and keeping the compressor operating at the minimum frequency, wherein the pressure difference

$\Delta P$ is the pressure difference between the compressor discharge pressure and the compressor suction pressure, $P_1$, $P_2$, and $P_3$ are preset pressure thresholds, and $P_3<P_2<P_1$; in a frequency increasing process of the compressor, if the compressor suction pressure is less than $P_3$, frequency increasing is stopped, and when the compressor suction pressure is greater than or equal to $P_3$, the compressor is continuously controlled to perform frequency increasing at a uniform speed.

3. The heat pump defrosting control method according to claim 2, wherein the heat pump defrosting control method further comprises:

    after the heat pump defrosting time sequence is entered, detecting a fin coil temperature of an evaporator in real time, and determining whether the fin coil temperature is greater than a preset temperature threshold;
    if the fin coil temperature is greater than the preset temperature threshold, entering a defrosting exit time sequence; and
    dynamically adjusting the operation manners of the compressor, the fan, and the electronic expansion valve according to the pressure difference in the defrosting exit time sequence.

4. The heat pump defrosting control method according to claim 3, wherein the dynamically adjusting the operation manners of the compressor, the fan, and the electronic expansion valve according to the pressure difference in the defrosting exit time sequence comprises:

    in the defrosting exit time sequence, when the pressure difference
    $\Delta P$ is greater than $P_1$, controlling the compressor to decrease at a uniform speed to the minimum frequency, and the electronic expansion valve to decrease by a second preset opening degree, wherein the first preset opening degree is less than the second preset opening degree;
    when the pressure difference
    $\Delta P$ is less than or equal to $P_1$ and is greater than or equal to $P_2$, controlling the compressor to decrease at a uniform speed to the minimum frequency, and the electronic expansion valve to decrease by the first preset opening degree; and
    when the pressure difference
    $\Delta P$ is less than $P_2$, controlling the four-way valve to switch a direction toward a defrosting exit mode through speed adjustment in cooperation with the inverter compressor, turning on the fan, controlling the fan to increase at a uniform speed to the maximum rotation speed, adjusting the electronic expansion valve to an initial opening degree, and controlling the compressor to increase at a uniform speed to a preset target frequency from the minimum frequency.

5. A heat pump defrosting control apparatus, using the heat pump defrosting control method defined according to any one of claims 1-4, wherein the heat pump defrosting control apparatus comprises:

    a memory, configured to store instructions;
    a reading module (301), configured to read in real time flag bit values respectively corresponding to multiple defrosting determining parameters;
    a determining module (302), configured to determine, according to each read flag bit value, whether a current heat pump meets the defrosting entry condition;
    an automated module (303), configured to: if the current heat pump meets the defrosting entry condition, enter the heat pump defrosting time sequence;
    a detection module (304), configured to: after the heat pump defrosting time sequence is entered, detect the compressor discharge pressure and the compressor suction pressure at a preset interval duration, and calculate a pressure difference between the compressor discharge pressure and the compressor suction pressure; and
    an adjustment module (305), configured to dynamically adjust operation manners of a compressor, a fan, and an electronic expansion valve according to the pressure difference in the heat pump defrosting time sequence; and at least one processor, configured to invoke the instructions in the memory, so that the heat pump defrosting control apparatus performs the heat pump defrosting control method according to any one of claims 1 to 4.

6. The heat pump defrosting control apparatus according to claim 5, wherein the heat pump defrosting control apparatus further comprises:

a collection module, configured to collect parameter values of the multiple defrosting determining parameters in real time;
the determining module (302)
is further configured to separately determine whether each parameter value meets the defrosting determining condition corresponding to the parameter value; and
a reset module, configured to: if each parameter value meets the defrosting determining condition corresponding to the parameter value, separately reset a flag bit value corresponding to each defrosting determining parameter.

7. A computer readable storage medium, wherein the computer readable storage medium stores instructions, and the instructions are to be executed via a processor by a heat pump defrosting control apparatus according to claim 5, which is configured to implement the heat pump defrosting control method according to any one of claims 1 to 4; wherein the processor is configured to comprise:

a reading module (301), configured to read in real time flag bit values respectively corresponding to multiple defrosting determining parameters;
a determining module (302), configured to determine, according to each read flag bit value, whether a current heat pump meets the defrosting entry condition;
an automated module (303), configured to: if the current heat pump meets the defrosting entry condition, enter the heat pump defrosting time sequence;
a detection module (304), configured to: after the heat pump defrosting time sequence is entered, detect the compressor discharge pressure and the compressor suction pressure at a preset interval duration, and calculate a pressure difference between the compressor discharge pressure and the compressor suction pressure; and
an adjustment module (305), configured to dynamically adjust operation manners of a compressor, a fan, and an electronic expansion valve according to the pressure difference in the heat pump defrosting time sequence.

**Patentansprüche**

1. Ein Verfahren zur Steuerung des Abtauens einer Wärmepumpe; wobei das Verfahren zur Steuerung des Abtauens einer Wärmepumpe Folgendes umfasst:

Lesen von Merker-Bitwerten in Echtzeit, die jeweils mehreren das Abtauen bestimmenden Parametern entsprechen (204);
Bestimmung, entsprechend jedem gelesenen Merker-Bitwert, ob eine aktuelle Wärmepumpe eine Abtaubedingung (205) erfüllt;
Wenn die aktuelle Wärmepumpe die Abtaubedingung erfüllt, Starten einer Abtausequenz für die Wärmepumpe (206);
Nach dem Starten der Abtausequenz für die Wärmepumpe Erfassen des Verdichter-Austrittsdrucks und des Verdichter-Ansaugdrucks bei einer Soll-Intervalldauer und Berechnen einer Druckdifferenz zwischen dem Verdichter-Austrittsdruck und dem Verdichter-Ansaugdruck (207); und
Dynamische Anpassung der Betriebsweise von Verdichter, Ventilator und elektronischem Expansionsventil in Abhängigkeit von der Druckdifferenz in der Abtausequenz für die Wärmepumpe (208), und wobei
Vor dem Lesen von Marker-Bitwerten in Echtzeit, die jeweils mehreren das Abtauen bestimmenden Parametern entsprechen, weiterhin Folgendes dazu gehört: Sammeln von Parameterwerten mehrerer das Abtauen bestimmenden Parameter in Echtzeit (201); getrennte Bestimmung, ob jeder Parameterwert eine das Abtauen bestimmende Bedingung erfüllt, die dem Parameterwert entspricht (202); und wenn jeder Parameterwert die das Abtauen bestimmende Bedingung erfüllt, die dem Parameterwert entspricht, getrenntes Zurücksetzen eines Marker-Bitwertes, der jedem das Abtauen bestimmenden Parameter entspricht (203), wobei
Das Abtauen bestimmende Parameter umfasst: Ventilator-Eingangsleistung, Verdichter-Ansaug-temperatur, Verdichter-Ansaugdruck, Wärmeerzeugungsleistung des Geräts und kumulative Betriebsdauer des Geräts nach Beginn oder Ende des Abtauens;
Das Sammeln von Parameterwerten mehrerer das Abtauen bestimmenden Parameter in Echtzeit umfasst: Erfassen von Ventilator-Eingangsleistung, Verdichter-Ansaugtemperatur, Verdichter-Ansaugdruck, Geräte-Wärmeerzeugungsleistung in Echtzeit, zu Beginn und Ende jedes Abtauzeitraums; Sammeln von Statistiken über die kumulative Geräte-Betriebsdauer in Echtzeit, Aufzeichnen der Geräte-Wärmeerzeugungsleistung, nachdem ein Gerät für eine Solldauer stabil arbeitet, nach dem Ende jedes Abtauzeitraums und Verwenden der aufgezeichneten Geräte-Wärmeerzeugungsleistung als ein Sollwert der Geräte-Wärmeerzeugungsleistung entsprechend eines nächsten Abtauzeitraums;

Die getrennte Bestimmung, ob jeder Parameterwert die dem Parameterwert entsprechende das Abtauen bestimmende Bedingung erfüllt, umfasst:

Die Bestimmung, gemäß einer ersten Soll-Abbildungsbeziehung zwischen einer Umgebungstemperatur und einer Ventilator-Eingangsleistung, ob die aktuelle Ventilator-Eingangsleistung größer ist als ein erster Sol-Prozentsatz eines Sollwerts der Ventilator-Eingangsleistung, der einer aktuellen Umgebungstemperatur entspricht;

Die Bestimmung, gemäß einer zweiten Soll-Abbildungsbeziehung zwischen einer Umgebungstemperatur und einer Verdichter-Ansaugtemperatur, ob eine aktuelle Verdichter-Ansaugtemperatur kleiner als ein Sollwert einer Verdichter-Ansaugtemperatur ist, die der aktuellen Umgebungstemperatur entspricht;

Die Bestimmung, gemäß einer dritten Soll-Abbildungsbeziehung zwischen einer Umgebungstemperatur und einem Verdichter-Ansaugdruck, ob der aktuelle Verdichter-Ansaugdruck niedriger als ein Sollwert des Verdichter-Ansaugdrucks ist, der der aktuellen Umgebungstemperatur entspricht;

Die Bestimmung, entsprechend einem Sollwert der Geräte-Wärmeerzeugungsleistung, die einem vorangegangenen Abtauzeitraum entspricht, ob die aktuelle Geräte-Wärmeerzeugungsleistung niedriger ist als ein zweiter Soll-Prozentsatz des Sollwerts der Geräte-Wärmeerzeugungsleistung, die dem vorangegangenen Abtauzeitraum entspricht; und

Die Bestimmung, entsprechend einem Sollwert der Intervalldauer von aufeinanderfolgenden Abtauzeiträumen, ob die kumulative Betriebsdauer des Geräts nach Beginn oder Ende eines Abtauzeitraums den Sollwert der Intervalldauer erreicht;

wobei die erste Soll-Abbildungsbeziehung anhand folgender Vorgehensweise der Messung ermittelt wird: während der Messung Betrieb des Ventilators mit der gleichen Drehzahl und Ausschalten des Verdichters; Anpassung der Umgebungstemperatur auf -40 bis 53 °C und Aufzeichnen der aktuellen Umgebungstemperatur und der Ventilator-Eingangsleistung entsprechend der Ist-Umgebungstemperatur in einem Soll-Temperaturintervall; Generieren der ersten Soll-Abbildungsbeziehung gemäß der aufgezeichneten Umgebungstemperatur und der Ventilator-Eingangsleistung, wobei die Ventilator-Eingangsleistung einmal in einem Intervall von 1 °C der Umgebungstemperatur von -40 bis 53 °C gemessen wird, um eine Auswirkungskurve der Umgebungstemperatur auf die Ventilator-Eingangsleistung zu erhalten, wenn der Ventilator nicht abgetaut ist, d. h. die erste Soll-Abbildungsbeziehung; die Auswirkungskurve wird in einem Hauptsteuerprogramm der Wärmepumpe voreingestellt und als ein Startreferenzwert des Geräts verwendet, unter Nutzung der Ventilator-Eingangsleistung zum Abtauen bei verschiedenen Umgebungstemperaturen.

2. Vorgehensweise zur Steuerung des Abtauens einer Wärmepumpe gemäß Forderung 1, wobei die dynamische Anpassung der Betriebsweise von Verdichter, Ventilator und elektronischem Expansionsventil in Abhängigkeit von der Druckdifferenz in der Abtausequenz der Wärmepumpe Folgendes umfasst:

In der Abtausequenz der Wärmepumpe, wenn die Druckdifferenz $\Delta P$ größer als $P_1$ ist, Steuerung des Verdichters so, dass er gleichmäßig auf die minimale Frequenz abfällt und der Ventilator gleichmäßig auf die maximale Drehzahl ansteigt, und des elektronischen Expansionsventils so, dass es die Wärmeregelung verlässt und um einen ersten Soll-Öffnungsgrad ansteigt; wenn die Druckdifferenz $\Delta P$ kleiner oder gleich $P_1$ und größer oder gleich $P_2$ ist, Steuerung des Verdichters so, dass er gleichmäßig auf die Minimalfrequenz abfällt und der Ventilator gleichmäßig auf die Maximaldrehzahl ansteigt, und des elektronischen Expansionsventils so, dass es einen Ist-Öffnungsgrad beibehält; und wenn die Druckdifferenz $\Delta P$ kleiner als $P_2$ ist, Ausschalten des Ventilators, Steuerung eines Vier-Wege-Ventils, um durch Drehzahlanpassung zusammen mit einem invertergeregelten Verdichter in Richtung eines Abtaueintrittsmodus zu wechseln, Anpassung des elektronischen Expansionsventils auf einen Abtauöffnungsgrad und Halten des Verdichters bei minimaler Frequenz; wobei die Druckdifferenz $\Delta P$ die Druckdifferenz zwischen dem Verdichter-Austrittsdruck und dem Verdichter-Ansaugdruck ist; $P_1$, $P_2$ und $P_3$ sind Soll-Druck-Schwellenwerte mit $P_3 < P_2 < P_1$; bei einem Frequenzerhöhungsprozess des Verdichters wird die Frequenzerhöhung gestoppt, wenn der Verdichter-Ansaugdruck kleiner als $P_3$ ist, und wenn der Verdichter-Ansaugdruck größer oder gleich $P_3$ ist, wird der Verdichter kontinuierlich gesteuert, um die Frequenzerhöhung gleichmäßig durchzuführen.

3. Vorgehensweise zur Steuerung des Abtauens einer Wärmepumpe nach Forderung 2, wobei diese Vorgehensweise außerdem Folgendes umfasst:

Nachdem die Zeitsequenz für das Abtauen der Wärmepumpe eingegeben wurde, Erfassen der Temperatur einer Verdampfer-Lamellenspule in Echtzeit und Bestimmung, ob die Temperatur der Lamellenspule größer als ein Soll-Temperaturschwellenwert ist;
Wenn die Temperatur der Lamellenspule größer ist als der Soll-Temperaturschwellenwert, Beginnen einer Abtau-Beendigungssequenz; und
Dynamisches Anpassung der Betriebsweise von Verdichter, Ventilator und elektronischem Expansionsventil entsprechend der Druckdifferenz in der Zeitsequenz der Abtaubeendigung.

4. Vorgehensweise zur Steuerung des Abtauens einer Wärmepumpe nach Forderung 3, wobei die dynamische Anpassung der Betriebsweise von Verdichter, Ventilator und elektronischem Expansionsventil in Abhängigkeit von der Druckdifferenz in der Zeitsequenz der Abtaubeendigung Folgendes umfasst:

in der Zeitsequenz der Abtaubeendigung, wenn die Druckdifferenz
$\Delta P$ größer als P1 ist, Steuerung des Verdichters zum gleichmäßigen Absenken auf die Minimalfrequenz und des elektronischen Expansionsventils zum Verringern um einen zweiten Soll-Öffnungsgrad, wobei der erste Soll-Öffnungsgrad geringer ist als der zweite Soll-Öffnungsgrad;
wenn die Druckdifferenz
$\Delta P$ kleiner oder gleich $P_1$ und größer oder gleich $P_2$ ist, Steuerung des Verdichter wird, dass er gleichmäßig auf die Minimalfrequenz abfällt, und des elektronischen Expansionsventils, um den ersten Soll-Öffnungsgrad abzufallen; und
wenn die Druckdifferenz
$\Delta P$ kleiner als $P_2$ ist, Steuerung des Vier-Wege-Ventils, dass es durch Geschwindigkeitsanpassung zusammen mit dem invertergeregelten Verdichter in einen Abtau-Beendigungsmodus wechselt, Einschalten und Steuerung des Ventilators, dass er gleichmäßige auf die maximale Drehzahl ansteigt, Anpassung des elektronischen Expansionsventils auf einen anfänglichen Öffnungsgrad und Steuerung des Verdichters, dass er gleichmäßig von der Minimalfrequenz auf eine Soll-Zielfrequenz ansteigt.

5. Vorrichtung zur Steuerung des Abtauens einer Wärmepumpe unter Verwendung der Vorgehensweise zur Steuerung des Abtauens einer Wärmepumpe, wie in einem der Ansprüche 1-4 definiert, wobei die Vorrichtung Folgendes umfasst:

Einen Speicher mit einer Konfiguration zum Speichern von Anweisungen;
Ein Lesemodul (301) mit einer Konfiguration zum Lesen von Marker-Bitwerten in Echtzeit, die jeweils mehreren das Abtauen bestimmenden Parametern entsprechen;
Ein Bestimmungsmodul (302) mit einer Konfiguration zur Bestimmung entsprechend jedem gelesenen Marker-Bitwert, ob eine aktuelle Wärmepumpe eine Abtaubedingung erfüllt;
Ein automatisiertes Modul (303) mit einer Konfiguration zum Starten der Abtausequenz für die Wärmepumpe, wenn die aktuelle Wärmepumpe die Abtaubedingung erfüllt;
Ein Erfassungsmodul (304) mit einer Konfiguration zum Erfassen des Verdichter-Austrittsdrucks und des Verdichter-Ansaugdrucks bei einer Soll-Intervalldauer und Berechnen einer Druckdifferenz zwischen dem Verdichter-Austrittdruck und dem Verdichter-Ansaugdruck nach dem Starten der Abtausequenz für die Wärmepumpe; und
Ein Anpassungsmodul (305) mit einer Konfiguration zur dynamischen Anpassung der Betriebsweise von Verdichter, Ventilator und elektronischem Expansionsventil in Abhängigkeit von der Druckdifferenz in der Abtauzeitfolge der Wärmepumpe;
Mindestens ein Prozessor mit einer Konfiguration zum Aufrufen der Anweisungen im Speicher, sodass die Vorrichtung zur Steuerung des Abtauens der Wärmepumpe die Vorgehensweise gemäß einem der Ansprüche 1-4 durchführt.

6. Vorrichtung zur Steuerung des Abtauens einer Wärmepumpe nach Forderung 5, wobei diese ferner Folgendes umfasst:

Ein Erfassungsmodul mit einer Konfiguration zum Erfassen von Parameterwerten mehrerer das Abtauen bestimmenden Parameter in Echtzeit;
Das Bestimmungsmodul (302)

mit einer Konfiguration zur separaten Bestimmung, ob jeder Parameterwert die dem Parameterwert entsprechende Abtaubedingung erfüllt;
und
Ein Rücksetzmodul mit folgender Konfiguration: wenn jeder Parameterwert die dem Parameterwert entsprechende das Abtauen bestimmende Bedingung erfüllt, wird ein Marker-Bitwert, der jedem das Abtauen bestimmenden Parameter entspricht, separat zurücksetzt.

7. Ein computerlesbares Speichermedium zum Speichern der Anweisungen; die Anweisungen werden über einen Prozessor durch eine Vorrichtung zur Steuerung des Abtauens der Wärmepumpe nach Forderung 5 ausgeführt; diese wurde so konfiguriert, dass die Vorgehensweise zur Steuerung des Abtauens der Wärmepumpe nach einem der Ansprüche 1-4 implementiert ist; wobei der die Konfiguration des Prozessors Folgendes umfasst:

Ein Lesemodul (301)
mit einer Konfiguration zum Lesen von Marker-Bitwerten in Echtzeit,
die jeweils mehreren das Abtauen bestimmenden Parametern entsprechen;
Ein Bestimmungsmodul (302)
mit einer Konfiguration zur Bestimmung entsprechend jedem
gelesenen Marker-Bitwert, ob eine aktuelle Wärmepumpe eine
Abtaubedingung erfüllt;
Ein automatisiertes Modul (303)
mit einer Konfiguration zum Starten der Abtausequenz für die
Wärmepumpe, wenn die aktuelle Wärmepumpe die Abtaubedingung
erfüllt;
Ein Erfassungsmodul (304)
mit einer Konfiguration zum Erfassen des Verdichter-Austrittsdrucks und des Verdichter-Ansaugdrucks bei einer Soll-Intervalldauer und Berechnen einer Druckdifferenz zwischen dem Verdichter-Austrittsdruck und dem Verdichter-Ansaugdruck nach dem Starten der Abtausequenz für die Wärmepumpe; und
Ein Einstellmodul (305)
mit einer Konfiguration zur dynamischen Anpassung der Betriebsweise von Verdichter, Ventilator und elektronischem Expansionsventil in Abhängigkeit von der Druckdifferenz in der Abtausequenz der Wärmepumpe.

## Revendications

1. Un procédé de contrôle du dégivrage d'une pompe à chaleur comprenant :

la lecture en temps réel des valeurs de bit d'indicateur correspondant respectivement à plusieurs paramètres de détection du dégivrage (204) ;
des outils permettant de déterminer, en fonction de chaque valeur de bit d'indicateur relevée, si une pompe à chaleur actuelle correspond à une condition préalable de dégivrage (205) ;
si la pompe à chaleur actuelle correspond à la condition préalable de dégivrage, la saisie d'une séquence de temps de dégivrage de la pompe à chaleur (206) ;
après que la séquence de dégivrage de la pompe à chaleur ait été introduite, la détection de la pression de refoulement du compresseur et de la pression d'aspiration du compresseur à intervalles prédéfinis, et le calcul d'une différence de pression entre la pression de refoulement du compresseur et la pression d'aspiration du compresseur (207) ; et
l'ajustement actif des modes de fonctionnement d'un compresseur, d'un ventilateur et d'un détendeur électronique conformément à la différence de pression dans la séquence temporelle de dégivrage de la pompe à chaleur (208),
et où
avant la lecture en temps réel des valeurs de bit d'indicateur correspondant respectivement à plusieurs paramètres permettant de déterminer le dégivrage, y compris : la collecte en temps réel des valeurs de paramètres des multiples paramètres permettant de déterminer le dégivrage (201) ; la possibilité de déterminer séparément si chaque valeur de paramètre correspond à une condition de dégivrage liée à la valeur de paramètre (202) ;
de déterminer si chaque valeur de paramètre correspond à la condition de dégivrage liée à la valeur de paramètre, et la possibilité de réinitialiser séparément une valeur de bit d'indicateur correspondant à chaque paramètre permettant de déterminer le dégivrage (203), où
les paramètres relatifs au dégivrage comprennent : la puissance d'entrée du ventilateur, la température d'aspiration du compresseur, la pression d'aspiration du compresseur, la puissance de production de chaleur unitaire et la durée cumulée de fonctionnement unitaire après le début ou la fin d'une période de dégivrage ;

la collecte en temps réel des valeurs des paramètres déterminant le dégivrage multiple comprend : la collecte en temps réel de la puissance d'entrée du ventilateur, de la température d'aspiration du compresseur, de la pression d'aspiration du compresseur, de la puissance de production de chaleur unitaire, au début ou à la fin de chaque période de dégivrage, la collecte en temps réel de statistiques sur la durée de fonctionnement cumulée unitaire, la collecte de la puissance de production de chaleur unitaire après le fonctionnement stable d'une unité pendant une durée prédéfinie après la fin de chaque période de dégivrage, et l'utilisation de la puissance de production de chaleur unitaire enregistrée comme valeur prédéfinie de la puissance de production de chaleur unitaire correspondant à une prochaine période de dégivrage ;

le procédé ayant pour but de déterminer séparément si chaque valeur de paramètre correspond à la condition de dégivrage établie en fonction de la valeur de paramètre consiste à :

déterminer, conformément à une première corrélation prédéfinie entre la température ambiante et la puissance d'entrée du ventilateur, si la puissance d'entrée actuelle du ventilateur est supérieure à un premier pourcentage prédéfini d'une valeur prédéfinie de la puissance d'entrée du ventilateur relative à la température ambiante actuelle ;

déterminer, selon une deuxième corrélation prédéfinie entre une température ambiante et une température d'aspiration du compresseur, si la température d'aspiration actuelle du compresseur est inférieure à une valeur prédéfinie d'une température d'aspiration du compresseur relative à la température ambiante actuelle ;

déterminer, selon une troisième corrélation prédéfinie entre la température ambiante et la pression d'aspiration du compresseur, si la pression d'aspiration actuelle du compresseur est inférieure à une valeur prédéfinie de la pression d'aspiration du compresseur relative à la température ambiante actuelle ;

déterminer, selon une valeur prédéfinie de la puissance de production de chaleur unitaire relative à une période de dégivrage précédente, si la puissance de production de chaleur unitaire actuelle est inférieure à un second pourcentage prédéfini de la valeur prédéfinie de la puissance de production de chaleur unitaire relative à la période de dégivrage précédente ; et

déterminer, en fonction d'une valeur prédéfinie de la durée de l'intervalle des périodes de dégivrage successives, si la durée de fonctionnement cumulée unitaire après le début ou la fin d'une période de dégivrage atteint la valeur prédéfinie de la durée de l'intervalle ;

dans laquelle la première corrélation prédéfinie est obtenue grâce au procédé de mesure suivante :

pendant la procédure de mesure, le ventilateur est réglé à la même vitesse de rotation et le compresseur est désactivé ; la température ambiante est réglée entre -40 °C-53 °C et la température ambiante actuelle et la puissance d'entrée du ventilateur relative à la température ambiante actuelle sont enregistrées à un intervalle de température préétabli ; et générer la première corrélation prédéfinie en fonction de la température ambiante et de la puissance d'entrée du ventilateur enregistrées, la puissance d'entrée du ventilateur étant mesurée une fois par intervalle de 1 °C de la température ambiante de -40 °C -53 °C pour obtenir une courbe d'impact de la température ambiante sur la puissance d'entrée du ventilateur lorsque le ventilateur n'est pas givré, c'est-à-dire la première corrélation prédéfinie ; la courbe d'impact est prédéfinie dans un programme de commande principal de la pompe à chaleur et est utilisée comme valeur de référence de départ pour déterminer l'unité utilisant la puissance d'entrée du ventilateur pour le dégivrage à des températures ambiantes différentes.

2. Procédé de contrôle du dégivrage de la pompe à chaleur selon la revendication 1, où le réglage dynamique des modes de fonctionnement d'un compresseur, d'un ventilateur et d'un détendeur électronique conformément à la différence de pression dans la séquence temporelle de dégivrage de la pompe à chaleur comprend :

dans la séquence de dégivrage de la pompe à chaleur, lorsque la différence de pression $\Delta P$ est supérieure à $P_1$, le compresseur est réglé pour réduire la fréquence minimale à une vitesse uniforme et le ventilateur pour accélérer la vitesse de rotation maximale à une vitesse uniforme ; enfin, le détendeur électronique est réglé pour évacuer l'ajustement thermique et incrémenter d'un premier degré d'ouverture prédéfini ;

lorsque la différence de pression $\Delta P$ est inférieure ou égale à $P_1$ et est supérieure ou égale à $P_2$, régler le compresseur pour qu'il ralentisse uniformément jusqu'à la fréquence minimale et le ventilateur pour qu'il augmente uniformément jusqu'à la vitesse de rotation maximale, et régler le détendeur électronique pour qu'il maintienne un degré d'ouverture courant ; et

lorsque la différence de pression

$\Delta P$ est inférieure à $P_2$, désactiver le ventilateur, régler une vanne à quatre voies pour qu'elle bascule vers un mode d'entrée en dégivrage grâce à l'ajustement de la vitesse réalisé conjointement avec un compresseur à inverseur, régler le détendeur électronique sur un degré d'ouverture en dégivrage et maintenir le fonctionnement du compresseur à la fréquence minimale, dans lequel

la différence de pression

où la différence de pression $\Delta P$ correspond à la différence de pression entre la pression de refoulement du compresseur et la pression d'aspiration du compresseur, , $P_1$, $P_2$ et $P_3$ sont des seuils de pression prédéfinis et $P_3<P_2<P_1$ ; dans un processus d'augmentation de la fréquence du compresseur, si la pression d'aspiration du compresseur est inférieure à $P_3$, la fréquence d'augmentation est interrompue, et lorsque la pression d'aspiration du compresseur est supérieure ou égale à $P_3$, le compresseur est réglé en continu pour effectuer un processus d'augmentation de la fréquence à une vitesse uniforme.

3. Le procédé de contrôle du dégivrage de la pompe à chaleur selon la revendication 2, dans lequel le procédé de contrôle du dégivrage de la pompe à chaleur consiste :

une fois la séquence de temps de dégivrage de la pompe à chaleur introduite, à détecter une température de la bobine à ailettes d'un évaporateur en temps réel, et à déterminer si la température de la bobine à ailettes est supérieure à un seuil de température prédéfini ;

si la température de la bobine à ailettes est supérieure au seuil de température prédéfini, à introduire une séquence de temps de sortie de dégivrage ; et

à ajuster dynamiquement les modes de fonctionnement du compresseur, du ventilateur et de la vanne d'expansion électronique en fonction de la différence de pression dans la séquence de temps de sortie de dégivrage.

4. Le procédé de contrôle du dégivrage de la pompe à chaleur selon la revendication 3, où l'ajustement dynamique des modes de fonctionnement du compresseur, du ventilateur et du détendeur électronique au regard de la différence de pression dans la séquence temporelle de sortie du dégivrage consiste :

dans la séquence de temps de sortie de dégivrage, lorsque la différence de pression

$\Delta P$ est supérieure à P1, à régler le compresseur pour qu'il fonctionne à une vitesse uniforme jusqu'à la fréquence minimale, et le détendeur électronique pour qu'il se rétracte d'un deuxième degré d'ouverture prédéfini, le premier degré d'ouverture prédéfini étant inférieur au deuxième degré d'ouverture prédéfini ;

lorsque la différence de pression

$\Delta P$ est inférieure ou égale à $P_1$ et supérieure ou égale à $P_2$, régler le compresseur pour qu'il ralentisse à une vitesse uniforme jusqu'à la fréquence minimale, et le détendeur électronique pour qu'il ralentisse du premier degré d'ouverture prédéfini ; et

lorsque la différence de pression

$\Delta P$ est inférieure à $P_2$, régler la vanne à quatre voies pour qu'elle bascule vers un mode de sortie de dégivrage en réglant la vitesse conjointement avec le compresseur à inverseur, activer le ventilateur, régler le ventilateur pour qu'il passe à une vitesse uniforme jusqu'à la vitesse de rotation maximale, régler le détendeur électronique à un degré d'ouverture initial, et régler le compresseur pour qu'il passe à une vitesse uniforme à une fréquence cible prédéfinie, depuis la fréquence minimale.

5. Un dispositif de contrôle du dégivrage d'une pompe à chaleur, utilisant le procédé de contrôle du dégivrage d'une pompe à chaleur définie selon l'une des revendications 1 à 4, où le dispositif de contrôle du dégivrage d'une pompe à chaleur comprend :

une mémoire, configurée pour stocker des instructions ;

un module de lecture (301), configuré pour lire en temps réel des valeurs de bits d'indicateurs correspondant respectivement à plusieurs paramètres permettant de déterminer le dégivrage ;

un module de détection (302), configuré pour déterminer, en fonction de chaque valeur de bit d'indicateur relevée, si une pompe à chaleur actuelle correspond à la condition d'entrée de dégivrage ;

un module automatisé (303), configuré pour : saisir la séquence temporelle de dégivrage de la pompe à chaleur si la pompe à chaleur actuelle correspond à la condition d'entrée en dégivrage ;

un module de détection (304), configuré pour : une fois la saisie de la séquence de temps de dégivrage de la pompe à chaleur, détecter la pression de refoulement du compresseur et la pression d'aspiration du compresseur à une durée d'intervalle prédéfinie, et calculer une différence de pression entre la pression de refoulement du compresseur et la pression d'aspiration du compresseur ; et

un module de réglage (305), configuré pour régler dynamiquement les modes de fonctionnement d'un compresseur, d'un ventilateur et d'un détendeur électronique en fonction de la différence de pression dans la séquence de temps de dégivrage de la pompe à chaleur ;

et au moins un processeur, configuré pour activer les instructions dans la mémoire, de sorte que le dispositif de contrôle du dégivrage de la pompe à chaleur exécute le procédé de contrôle du dégivrage de la pompe à chaleur selon l'une des revendications 1 à 4.

6. Le dispositif de contrôle du dégivrage de la pompe à chaleur selon la revendication 5, dans lequel le dispositif de contrôle du dégivrage de la pompe à chaleur comprend également :

un module de collecte, configuré pour collecter les valeurs des paramètres des multiples paramètres déterminant le dégivrage en temps réel ;

le module de détection (302)

est également configuré pour déterminer séparément si chaque valeur de paramètre correspond à la condition de détection de dégivrage relative à la valeur de paramètre ; et

un module de réinitialisation, configuré pour : réinitialiser séparément une valeur de bit d'indicateur relative à chaque paramètre de détection de dégivrage, si chaque valeur de paramètre correspond à la condition de détection de dégivrage relative à la valeur de paramètre.

7. Un dispositif de stockage informatique lisible, stockant des instructions destinées à être exécutées par un processeur via un dispositif de contrôle de dégivrage de pompe à chaleur selon la revendication 5, qui est configuré pour exécuter le procédé de contrôle de dégivrage de pompe à chaleur selon l'une des revendications 1 à 4 ; dans lequel le processeur est configuré pour inclure :

un module de lecture (301),
configuré pour relever en temps réel des valeurs de bits
d'indicateurs correspondant respectivement à de multiples paramètres
permettant de déterminer le dégivrage;

un modèle de détection (302),
configuré pour déterminer, conformément à chaque valeur
de bit d'indicateur de lecture, si une pompe à chaleur actuelle
est conforme à la condition d'entrée de dégivrage ;

un module automatisé (303),
configuré pour : saisir la séquence de temps de dégivrage de
la pompe à chaleur, si la pompe à chaleur actuelle correspond à
la condition d'entrée de dégivrage ;

un modèle de détection (304),
configuré pour : après la saisie de la séquence de temps de dégivrage de la pompe à chaleur, détecter la pression de refoulement du compresseur et la pression d'aspiration du compresseur à une durée d'intervalle prédéfinie, et déterminer une différence de pression entre la pression de refoulement du compresseur et la pression d'aspiration du compresseur ; et

un module de réglage (305),
configuré pour régler de manière dynamique les modes de fonctionnement d'un compresseur, d'un ventilateur et d'un détendeur électronique selon la différence de pression dans la séquence temporelle de dégivrage de la pompe à chaleur.

```
┌─────────────────────────────────────────────────────────────┐        ┌─ 101
│                                                             │  ╱────┘
│   Read in real time flag bit values respectively corresponding to multiple │
│                  defrosting determining parameters          │
│                                                             │
└─────────────────────────────────────────────────────────────┘
                              │
                              ▼
┌─────────────────────────────────────────────────────────────┐        ┌─ 102
│                                                             │  ╱────┘
│   Determine, according to each read flag bit value, whether a current heat │
│                  pump meets a defrosting entry condition    │
│                                                             │
└─────────────────────────────────────────────────────────────┘
                              │
                              ▼
┌─────────────────────────────────────────────────────────────┐        ┌─ 103
│                                                             │  ╱────┘
│   If the current heat pump meets the defrosting entry condition, enter a heat │
│                  pump defrosting time sequence              │
│                                                             │
└─────────────────────────────────────────────────────────────┘
                              │
                              ▼
┌─────────────────────────────────────────────────────────────┐        ┌─ 104
│   After the heat pump defrosting time sequence is entered, detect discharge │
│  pressure and suction pressure of a compressor at a preset interval duration, │
│  and calculate a pressure difference between the discharge pressure and the │
│                  suction pressure of the compressor         │
└─────────────────────────────────────────────────────────────┘
                              │
                              ▼
┌─────────────────────────────────────────────────────────────┐        ┌─ 105
│   Dynamically adjust operation manners of the compressor, a fan, and an │
│  electronic expansion valve according to the pressure difference in the heat │
│                  pump defrosting time sequence              │
└─────────────────────────────────────────────────────────────┘
```

FIG. 1

Collect parameter values of multiple defrosting determining parameters in real time — 201

Separately determine whether each parameter value meets a defrosting determining condition corresponding to the parameter value — 202

If each parameter value meets the defrosting determining condition corresponding to the parameter value, separately reset a flag bit value corresponding to each defrosting determining parameter — 203

Read in real time flag bit values respectively corresponding to multiple defrosting determining parameters — 204

Determine, according to each read flag bit value, whether a current heat pump meets a defrosting entry condition — 205

If the current heat pump meets the defrosting entry condition, enter a heat pump defrosting time sequence — 206

After the heat pump defrosting time sequence is entered, detect discharge pressure and suction pressure of a compressor at a preset interval duration, and calculate a pressure difference between the discharge pressure and the suction pressure of the compressor — 207

Dynamically adjust operation manners of the compressor, a fan, and an electronic expansion valve according to the pressure difference in the heat pump defrosting time sequence — 208

FIG. 2

Fan input power

Fin frosting degree

FIG. 3

Fan input power

$P_0$

$t_0$    Ambient
temperature

FIG. 4

FIG. 5

FIG. 6

Unit heat production power

P

Fin frosting degree

FIG. 7

FIG. 8

EP 4 071 417 B1

FIG. 9

**REFERENCES CITED IN THE DESCRIPTION**

**Patent documents cited in the description**

- CN 110595122 A
- WO 2020056956 A1
- CN 111412700 A
- CN 110173820 A